# EUROPÄISCHE PATENTSCHRIFT

(11) **EP 2 191 335 B1**
(45) Veröffentlichungstag und Bekanntmachung des Hinweises auf die Patenterteilung: **10.10.2012**
(21) Anmeldenummer: 08785628.2
(22) Anmeldetag: 19.08.2008
(51) Int. Cl.: G05B 19/042, G06F 9/44

(54) **VORRICHTUNG UND VERFAHREN ZUM COMPUTERGESTÜTZTEN KONSTRUIEREN EINER ANLAGE**
DEVICE AND METHOD FOR THE COMPUTER-ASSISTED CONSTRUCTION OF AN INSTALLATION
DISPOSITIF ET PROCÉDÉ DE CONSTRUCTION ASSISTÉE PAR ORDINATEUR D'UNE INSTALLATION

(30) Priorität: 04.09.2007 DE 102007041739
(43) Veröffentlichungstag der Anmeldung: 02.06.2010
(60) Teilanmeldung: 11002948.5
(73) Patentinhaber: SEW-EURODRIVE GmbH & Co. KG, 76646 Bruchsal (DE)
(72) Erfinder: JÄGER, Oliver, 67149 Meckenheim (DE); URLAUB, Jonas, 76703 Kraichtal-Landshausen (DE); EBERT, Tobias, 76646 Bruchsal (DE); OCHS, Sebastian, 76726 Germersheim (DE)
(74) Vertreter: Tüngler, Eberhard
(86) Internationale Anmeldenummer: PCT/EP2008/006815
(87) Internationale Veröffentlichungsnummer: WO 2009/030362

(56) Entgegenhaltungen:
- EP-A- 1 355 208
- EP-A- 1 674 954
- DE-A1-102004 003 569
- US-A- 6 154 684
- GERSTNER T ET AL: "RATIONELLES PROJEKTIEREN VON AUTOMATISIERUNGSSYSTEMEN. ÖRATIONAL PLANNING OF AUTOMATION SYSTEMS" AUTOMATISIERUNGSTECHNISCHE PRAXIS - ATP, OLDENBOURG INDUSTRIEVERLAG, MUNCHEN, DE, Bd. 36, Nr. 12, 1. Dezember 1994 (1994-12-01), Seiten 42-45, XP000483710 ISSN: 0178-2320
- HALANG W A: "Software dependability considered as the main problem of embedded systems" INDUSTRIAL TECHNOLOGY, 2003 IEEE INTERNATIONAL CONFERENCE ON MARIBOR, SLOVENIA DEC. 10-12, 2003, PISCATAWAY, NJ, USA,IEEE, Bd. 1, 10. Dezember 2003 (2003-12-10), Seiten 14-21, XP010698325 ISBN: 978-0-7803-7852-0

## Beschreibung

Die Erfindung betrifft eine Vorrichtung und ein Verfahren zum computergestützten Konstruieren einer Anlage.

Aus der DE 10 2004 020 994 A1 ist ein Verfahren und eine Vorrichtung zum computergestützten Konstruieren einer sicherheitsgerichteten Schaltung bekannt, bei dem eine Vielzahl von Schaltungskomponenten in einer computerimplementierten Bibliothek bereitgestellt werden, die computergestützt ausgewählt und miteinander verknüpft werden, wobei computerimplementierte Regelsätze mit sicherheitstechnischen Konstruktionsregeln verwendet werden und wobei automatisiert geprüft wird, ob die ausgewählten und verknüpften Schaltungskomponenten den Konstruktionsregeln von zumindest einem definierten Regelsatz vollständig entsprechen.

Aus der Norm DIN EN ISO 13489-1, insbesondere Kapitel 6.2, ist ein System von Beschreibungen für die Sicherheit von Anlagen in Form von Sicherheitskategorien bekannt.

Aus Gerstner, T. et al.: Rationelles Projektieren von Automatisierungssystemen. Rational Planning of Automation Systems, Automatisierungstechnische Praxis - ATP. Oldenbourg Industrieverlag, München, DE, Bd. 36, Nr. 12, 1. Dezember 1994, Seiten 42-45, sind Standardpläne als Bibliothekselemente bekannt, welche in der Verfahrenstechnik üblicherweise für wiederkehrende, standardisierte Funktionen eingesetzt werden. Um Funktionspläne aus Standardplänen zu generieren, erstellt der Projekteur eine Anweisungsliste, in der aus der Bibliothek die gewünschten Standardpläne aufgerufen und mit den erforderlichen Importdaten für die Planvariablen versorgt werden. Diese Daten können manuell editiert oder aus externen Planungswerkzeugen übernommen werden.

Aus der EP1355208A1 ist ein System zur Automatisierung technischer Prozesse und/oder Versuche bekannt, bei dem eine Mess- und eine Steuereinheit, die mittels Mess- und Steuerkanälen mit Sensoren und Aktoren des Prozesses oder einer Versuchseinheit in Verbindung stehen, zumindest eine Bibliothek, die Visualisierungsobjekte und Steuermodule enthält, und das System beherrschende Software vorgesehen sind, um einem Anwender ohne Kenntnisse von Programmiertechniken Anwendungen zu entwickeln.

Aus Halang, W. A.: Software Dependability Considered as the Main Problem of Embedded Systems, Industrial Technology, 2003 IEEE International Conference on Maribor, Slovenia Dec. 10-12, 2003, Piscataway, NJ, USA, IEEE, Bd. 1, 10. Dezember 2003, Seiten 14-21, ISBN: 978-0-7803-7852-0, ist es bekannt, technische Anlagen mit gewünschter Sicherheitsstufe mit Hilfe von auf bestimmte Sicherheitsanforderungen geprüften Bibliotheken zu konstruieren.

Der Erfindung liegt die Aufgabe zugrunde, die Konfiguration einer Anlage zu vereinfachen.

Erfindungsgemäß wird die Aufgabe bei dem Verfahren zum computergestützten Konstruieren einer Anlage nach den in Anspruch 1 und bei der Vorrichtung zum computergestützten Konstruieren einer Anlage nach den in Anspruch 4 angegebenen Merkmalen gelöst.

Wichtige Merkmale der Erfindung einer Vorrichtung zum computergestützten Konstruieren einer Anlage mit definierter Sicherheitsstufe sind in Anspruch 4 angegeben. Insbesondere ist vorgesehen, dass
- in einem ersten Speicherbereich eine computerimplementierte Bibliothek mit einer Vielzahl von Schaubildern von Anlagen hinterlegt ist,
   wobei zu jedem Schaubild zusätzlich zumindest die Komponenten der abgebildeten Anlage und/oder die durch das Schaubild realisierte Sicherheitskategorie und/oder die durch das Schaubild realisierte Sicherheitsfunktionalität hinterlegt sind
- Mittel zur automatisierten Auswahl eines Schaubildes aus der computerimplementierten Bibliothek vorhanden sind und
- Mittel zum Anzeigen des ausgewählten Schaubildes vorhanden sind.

Unter Sicherheitsstufe wird in dieser Anlage die Kombination aus Sicherheitsfunktionalität, also den Merkmalen einer Anlage, für die Anforderungen gemäß der DIN EN ISO 13489-1 oder einer anderen Sicherheitsnorm formulierbar sind, und der Sicherheitskategorie nach dieser Norm verstanden. Die Sicherheitsfunktionalität beschreibt also, was betrachtet werden soll, während die Sicherheitskategorie beschreibt, in welchem Grad Fehlersicherheit erreicht wird. Hierdurch wird für den Benutzer der Vorrichtung der Sicherheitsaspekt in den Vordergrund gestellt. Die Konstruktion der Anlage kann sodann erfolgen, wenn die benötigten Komponenten und deren Verschaltung mit der erfindungsgemäßen Vorrichtung geklärt sind. Durch die Vorgabe einer Sicherheitsfunktonalität wird vorteilhaft erreicht, dass alle Komponenten der Anlage, sofern die Merkmale der Sicherheitsfunktionalität Anwendung finden, derart ausgelegt werden, dass eine Sicherheitskategorie erreicht wird. Somit ist sichergestellt, dass nicht eine Komponente, beispielsweise der Antrieb einer Bewegungsachse, bei der sicheren Auslegung einer Anlage übersehen wird, und es werden destruktive Interferenzen zwischen den einzelnen Komponenten, die zu einer Reduzierung der erreichten Sicherheitskategorie führen würden.

Die Mittel zur automatisierten Auswahl können in Form eines Standard-Programms auf einem Computer, beispielsweise einem Browser, gegeben sein.

Bei einer vorteilhaften Ausgestaltung sind die möglichen Sicherheitsfunktionalitäten durch Merkmale beschrieben, wobei die Sicherheitsfunktionalitäten durch sukzessives Hinzunehmen von Merkmalen aus einer Gruppe von Merkmalen zu einer Sicherheits-Grundfunktionalität gebildet sind. Von Vorteil ist dabei, dass der Benutzer nicht jeden Antrieb seiner Anlage getrennt planen muss und so vielleicht gegenseitige Abhängigkeiten übersieht, sondern dass von vornherein die benötigte Sicherheitsstufe ganzheitlich festgelegt werden kann. Somit kann nicht eine einzelne Bewegungsachse oder ein einzelner Kommunikationskanal übersehen werden.

Bei einer vorteilhaften Ausgestaltung umfasst die Gruppe der Merkmale die Merkmale "sichere Abschaltung" und/oder "sichere Kommunikation" und/oder "sichere Geschwindigkeiten" und/oder "sichere Positionen". Von Vorteil ist dabei, dass die Vorrichtung geeignet ist zur Konfiguration von Antriebseinheiten in Anlagen, da die Merkmale auf Antriebssysteme zugeschnitten sind.

Bei einer vorteilhaften Ausgestaltung wird die Sicherheits-Grundfunktionalität durch das Merkmal "sichere Abschaltung" beschrieben und es sind die möglichen Sicherheitsfunktionalitäten durch sukzessives Hinzunehmen von Merkmalen in der Reihenfolge nach dem vorangegangenen Anspruch gebildet. Somit ist eine übersichtliche Gliederung geschaffen, die menschliche Fehler beim Konfigurieren eliminiert und sogar die Bedienung durch gering geschulte Benutzer ermöglicht.

Bei einer vorteilhaften Ausgestaltung bildet jedes Schaubild eine funktionsfähige Anlage, insbesondere in stilisierter Form, ab. Vorzugsweise enthält jedes Schaubild den Verschaltungsplan einer funktionsfähigen Anlage. Von Vorteil ist dabei, dass die Benutzerin oder der Benutzer keine nicht-funktionstüchtige Anlage konfigurieren kann, auch nicht aufgrund eines Programmierfehlers im Konfigurationsprogramm. Vielmehr ist jedes einzelne Schaubild von unabhängiger Stelle, beispielsweise dem TÜV getrennt prüfbar. Die Schaubilder sind somit jedes für sich mit einem Prüfsiegel versehbar, also zertifizierbar bezüglich Sicherheit. Daher kann ein nachträgliches Zertifizieren nach der Konfiguration entfallen und es ist ein vorsorglich zertifiziertes System bereitgestellt. Da die fertigen Schaubilder abgespeichert sind, muss kein Regelwerk gepflegt werden, und ein automatisiertes Prüfen, ob die dargestellte Anlage den Konstruktionsregeln mindestens eines Regelsatzes entspricht, kann entfallen. Hierdurch ist eine größere Sicherheit für den Anwender erreicht, denn es werden alle Fehler vermieden, die sich durch eine fehlerhafte Prüfroutine oder ein mangelhaftes Regelwerk einstellen könnten.

Bei einer vorteilhaften Ausgestaltung bildet jedes Schaubild die Komponenten der Anlage und die Verbindungsleitungen zwischen den Komponenten als Verschaltungsplan ab. Von Vorteil ist dabei, dass der Benutzer eine übersichtliche Prinzipskizze erhält, welche Komponenten in seiner Anlage für eine bestimmte Sicherheitsanforderung benötigt werden und wie diese zu verschalten sind.

Bei einer vorteilhaften Ausgestaltung sind gleichartige Verbindungsleitungen, insbesondere Starkstromleitungen, 24V-Leitungen und/oder Signalleitungen, in jedem Schaubild durch gleiche Merkmale, insbesondere Strichstärke, Musterung und/oder Farbwahl, kenntlich gemacht. Von Vorteil ist dabei, dass der Benutzer Unterschiede zwischen ähnlichen Varianten leicht auffinden kann.

Bei einer vorteilhaften Ausgestaltung sind bei dem in den Schaubildern abgebildeten Komponenten die Anschlussmittel bildhaft derart dargestellt, dass die Lage der Anschlussmittel an jeder Komponente relativ zueinander und/oder zu der Komponente mit der Lage der Anschlussmittel an der realen Komponente übereinstimmt. Vorzugsweise sind die Komponenten in den Schaubildern fotoähnlich dargestellt und die Verbindungsleitungen verbinden die jeweils elektrisch zu verbindenden Anschlussmittel der Komponenten grafisch. Von Vorteil ist dabei, dass auch ungeschulte Benutzer den Anschluss der Anlage nach den Vorgaben des Schaubilds vornehmen können.

Bei einer vorteilhaften Ausgestaltung bildet jedes Schaubild der computerimplementierten Bibliothek eine eindeutige Identifizierungskennung für das Schaubild ab. Vorzugsweise enthält die Identifizierungskennung eine Information über die Version der verwendeten Software und/oder über das Erstellungsdatum des Schaubilds und/oder über den Ersteller des Schaubilds und/oder eine fortlaufende Nummer. Von Vorteil ist dabei, dass die Prüfung der einzelnen Schaubilder dokumentierbar ist, und dass jeder Ausdruck eines Schaubildes einen Hinweis auf seine Herkunft und Entstehungsgeschichte enthält.

Bei einer vorteilhaften Ausgestaltung bildet jedes Schaubild der computerimplementierten Bibliothek eine Liste der im Schaubild abgebildeten Komponenten ab. Von Vorteil ist dabei, dass ein Benutzer mit dem Schaubild eine Bestellliste erhält.

Bei einer vorteilhaften Ausgestaltung bildet jedes Schaubild der computerimplementierten Bibliothek eine Information über die im Schaubild realisierte Sicherheitsstufe ab. Von Vorteil ist dabei, dass bei falscher Bedienung des Konfigurationsprogramms immer gültige Schaubilder ausgegeben werden, und der Benutzer seine Fehlbedienung daran erkennt, dass das ausgegebene Schaubild andere Sicherheitsanforderungen erfüllt.

Bei einer vorteilhaften Ausgestaltung bildet jedes Schaubild der computerimplementierten Bibliothek Informationen ab, die beim Aufbau der Anlage nach dem Schaubild zu beachten sind. Von Vorteil ist dabei, dass keine zusätzlichen Handbücher zu beachten sind, und dass wichtige Informationen beim Aufbau der Anlage nicht übersehen werden.

Bei einer vorteilhaften Ausgestaltung sind in einer Gruppe von Schaubildern gleiche Komponenten jeweils an derselben Stelle im Schaubild abgebildet. Vorzugsweise sind in einer Gruppe von Schaubildern gleiche Verbindungsleitungen, insbesondere Verbindungsleitungen zwischen gleichen Komponenten, jeweils an derselben grafischen Position im Schaubild abgebildet. Von Vorteil ist dabei, dass Unterschiede zwischen Schaubildern leichter erkennbar sind und dass die Verschaltung für einen Nichtfachmann übersichtlicher und leichter verständlich ist.

Bei einer vorteilhaften Ausgestaltung sind die Schaubilder in der computerimplementierten Bibliothek nach ihrer jeweiligen Sicherheitskategorie getrennt hinterlegt. Von Vorteil ist dabei, dass ein versehentliches Wechsein der Sicherheitskategorie ausgeschlossen ist.

Bei einer vorteilhaften Ausgestaltung zeigt jedes Schaubild einen oder mehrere Antriebseinheiten, umfassend zumindest einen Motor, und zumindest einen Frequenzumrichter. Vorzugsweise sind als Komponenten Antriebseinheiten, Frequenzumrichter, Motorschütze, Schalter, Bussysteme, Winkelgeber, Anbau-Motorbremsen und/oder Steckkarten für Frequenzumrichter auswählbar. Von Vorteil ist dabei, dass die Vorrichtung besonders geeignet ist zur sicheren Konfiguration einer Anzahl von Antriebseinheiten unter sicherheitstechnischen Aspekten.

Bei einer vorteilhaften Ausgestaltung sind als Verbindungsleitungen Drehstromleitungen, insbesondere Energieleitungen für eine Antriebseinheit, Energieleitungen für eine Bremse, Signalleitungen für einen Winkelgeber, sichere 24V-Versorgungsleitungen und/oder Leitungen für Steuer-/Rückmaldekanäle abgebildet. Von Vorteil ist dabei, dass die Vielfalt der Anschluss- und Verbindungsmöglichkeiten von Antriebssystemen abbildbar ist.

Bei einer vorteilhaften Ausgestaltung sind die Merkmale der Schaubilder derart dargestellt, dass sie auch bei Schwarz-Weiß-Ausdruck sichtbar bleiben. Von Vorteil ist dabei, dass beim Ausdruck keine Informationen verloren gehen.

Bei einer vorteilhaften Ausgestaltung ist jedes Schaubild sicherheitszertifiziert ist, enthält insbesondere ein Prüfsiegel. Unter sicherheitszertifiziert wird eine Überprüfung durch eine anerkannte Kontrollinstanz, beispielsweise den TÜV oder eine Regierungsbehörde, verstanden.

Insgesamt bietet die Erfindung nicht nur den Vorteil, eine Anlage unter sicherheitstechnischen Aspekten computergestützt zu konfigurieren, sondern auch den Vorteil, dass das Konfigurieren selbst fehlersicher erfolgen kann.

Eine Anwendung der Erfindung bei einem Rechner kann vorsehen, dass eine graphische Benutzerschnittstelle und ein Speicher mit Schaubildern vorgesehen sind, wobei die Schaubilder funktionsfähige sicherheitstechnische Verschaltungspläne von Antriebssystemen zeigen und aktive Links enthalten und wobei ein Benutzer durch Anwählen der aktiven Links über die graphische Benutzerschniltstelle zur Konfiguration eines Antriebssystems zwischen den Schaubildern seriell, also von einem Schaubild zum nächsten, navigieren kann, wobei die aktiven Links jeweils eine Modifizierung des Antriebssystems beschreiben. Von Vorteil ist dabei, dass eine einfache Umsetzung einer erfindungsgemäßen Vorrichtung bereitgestellt ist.

Eine Anwendung der Erfindung bei einem Datenträger mit Schaubildern kann vorsehen, dass die Schaubilder funktionsfähige sicherheitstechnische Verschaltungspläne von Antriebssystemen zeigen, wobei die Schaubilder aktive Links enthalten und ein Benutzer durch Anwählen der aktiven Links über die graphische Benutzerschnittstelle zur Konfiguration eines Antriebssystems zwischen den Schaubildern navigieren kann, wobei die aktiven Links jeweils eine Modifizierung des Antriebssystems beschreiben und jedes Schaubild eine eindeutige Identifizierungskennung darstellt. Von Vorteil ist dabei, dass eine besonders einfach zu bedienende erfindungsgemäße Vorrichtung zur Konfiguration bereitgestellt wird, indem der Datenträger, eine CD-ROM; DVD, ein Memory-Stick oder Speicherbereich auf einem Internet-Server, von einem Standard-PC oder einer Standard-Konsole ausgelesen wird und die Standard-Software des Standard-PC oder der Standard-Konsole die erforderlichen Mittel zur automatisierten Auswahl und zur Anzeige eines Schaubild zur Verfügung stellt.

Wichtige Merkmale der Erfindung eines Verfahrens zum computergestützten Konstruieren einer Anlage mit definierter Sicherheitsstufe sind in Anspruch 1 angegeben. Insbesondere ist vorgesehen, dass die Schritte
- Bereitstellen einer Vielzahl von Schaubildern von Anlagen in einer computerimplementierten Bibliothek,
   insbesondere in einer computerimplementierten Bibliothek einer Vorrichtung nach einem der vorangegangenen Ansprüche,
- computergestütztes Auswählen von Komponenten der gewünschten Anlage und von der gewünschten Sicherheitskategorie und/oder der gewünschten Sicherheitsfunktionalität,
- automatisiertes Auswählen des zu den ausgewählten Komponenten und der ausgewählten Sicherheitskategorie und/oder der ausgewählten Sicherheitsfunktionalität gehörigen Schaubilds aus der computerimplementierten Bibliothek
ausgeführt werden. Von Vorteil ist dabei, dass für eine Konfigurationsvariante keine Regelsätze geprüft werden müssen, die fehlerhaft gewartet sein könnten. Von Vorteil ist dabei weiter, dass der Benutzer nicht das Verschalten der Komponenten im Schaubild übernehmen muss. Somit sind Verschaltungsfehler vermieden. Zudem muss der Benutzer nicht das bereitgestellte Arsenal der Komponenten überblicken, sondern kann sich auf die Festlegung der Sicherheitsanforderungen beschränken. Der Benutzer ist somit nicht gezwungen, durch probierende Auswahl von Komponenten die richtige Verschaltung für eine Sicherheitsanforderung zu erraten.

Bei einer vorteilhaften Ausgestaltung erfolgt das computergestützte Auswählen von Komponenten der gewünschten Anlage und der gewünschten Sicherheitsstufe iterativ anhand eines Verzweigungsbaums, wobei in jedem Auswahlschritt zu den aktuell ausgewählten Komponenten und der aktuell ausgewählte Sicherheitsfunktionalität und/oder der aktuell ausgewählten Sicherheitskategorie das zugehörige Schaubild aus der computerimplementierten Bibliothek ausgewählt und angezeigt wird. Von Vorteil ist dabei, dass die Konfiguration durch den Benutzer einfach und übersichtlich durchführbar ist, und dass der Verzweigungsbaum einfach gepflegt werden kann. Vorzugsweise enthält der Verzweigungsbaum die Verweise auf die Schaubilder, sodass selbst bei fehlerhaft gepflegtem Verzweigungsbaum immer gültige Schaubilder ausgegeben werden.

Bei einer vorteilhaften Ausgestaltung wird der Verzweigungsbaum als Liste von aktiven Links in jedem Schaubild angezeigt, wobei die gewünschten Komponenten und/oder die gewünschte Sicherheitsstufe und/oder die gewünschte Sicherheitskategorie durch Betätigen der entsprechenden Links des aktuellen Schaubilds ausgewählt werden. Von Vorteil ist, dass der Programmieraufwand gering ist.

Bei einer vorteilhaften Ausgestaltung ist die Liste von aktiven Links für alle Schaubilder gleich und enthält alle auswählbaren Komponenten und/oder Sicherheitsfunktionalitäten und/oder Sicherheitskategorien, wobei die jeweils ausgewählten Komponenten und/oder Sicherheitsfunktionalitäten und/oder Sicherheitskategorien besonders kenntlich gemacht sind, insbesondere durch ein spezielles Symbol. Von Vorteil ist dabei, dass der Ausdruck auf einem Schwarz-Weiß-Drucker keinen Informationsverlust mit sich bringt.

Bei einer vorteilhaften Ausgestaltung sind die Verschaltungspläne der Schaubilder sicherheitszertiffiziert, insbesondere wobei jedes Schaubilder ein spezifisches Prüfsiegel anzeigt. Somit kann ein Benutzer sicher sein, dass er selbst bei Fehlbedienung des Konfigurationsprogramms das erzielte Ergebnis bedenkenlos verwenden kann.

Weitere Vorteile ergeben sich aus den Unteransprüchen.

### Bezugszeichenliste

1 Verschaltungsplan
10 Navigationsliste
11 Identnummer
12a Antriebs-Sicherheitsfunktion
12b Antriebs-Sicherheitsfunktion
12c Sicherheitswamung
12d Erweiterungshinweis
13 Hilfefeld
14a Naustart-Schaltfläche
14b Drucken-Schaltfläche
14c Beenden-Schaltfläche
40 Ein-/Ausgabemittel
41 Auswahlprogramm
42 Schaubild-Bibliothek
43 Verzweigungsbaum-Datenspeicher
44 Konfigurationsbefehl
45 Schaubild-Ausgabe
46 Navigationsschritt
47 aktualisierte Schaubildnummer
48 aktuelle Schaubildnummer
49 aktuelles Schaubild
50 PC
51 Bildschirm
52 Tastatur
53 Maus
54 Konfigurationswerkzeug
55 Speichermedium
56 Datenaustausch
100 Antriebseinheit
101 Umrichter
102 Sicherheitsschaltgerät
103 Bremsmodul
104 Schütz
105 Winkelgeber
106 Sicherheits-Universalgerät
107 Optionssteckkarte
108 Bremse
109 Gehäuselinie
120 Energieleitung für einen Motor
121 Energieleitung für eine Bremse
122 sichere 24V Versorgungsleitung
123 Signalleitung für einen Winkelgeber
124 Steuer-/Rückmeldekanal
125 Busleitung
126 Steckkontakt
127 Anschlusskasten
128 Getriebe
129 Motor
130 Geberfuß
131 Geberwelle
132 Steckkontakt
200 Schriftzug
201 DIP-Schalter
202 LED-Anzeige
203 RS232-Anschluss
204 Modularbuchse
301 Hinzunahme einer Bremse
302 Hinzunahme eines Motors
303 Hinzunahme eines Busanschlusses
304 Hinzunahme eines Gebers
305 Hinzunahme einer weiteren Komponente
306 Hinzunahme eines Gebers und einer Bremse
310 Hinzunahme einer Sicherheitsfunktionalität
311 Hinzunahme einer Sicherheitsfunktionalität und einer Bremse
312 Hinzunahme einer Sicherheitsfunktionalität, einer Bremse und eines Busanschlusses
313 Hinzunahme einer Sicherheitsfunktionalität und eines Busanschlusses
400, 401. 410, 411, 420, 421, 430 431, 432, 440, 441, 442 Schaubild
500 Verzweigungsbaum der nächsthöheren Sicherheitskategorie
600 Oberbegriff
601, 602, 603 Ausprägung

Die Erfindung wird nun anhand von Abbildungen näher erläutert:
Es zeigen
   - Figur 1.1 bis 1.13 schematisierte Schaubilder, die mit einem erfindungsgemäßen Konfigurationswerkzeug erstellt wurden,
   - Figur 2.1 und 2.2 die stilisierten Darstellungen von Komponenten in den Schaubildern,
   - Figur 3.1 die Ordnung und den Aufbau der möglichen Sicherheitsfunktionalitäten,
   - Figur 3.2 die Anordnung der Schaubilder in einem Verzweigungsbaum,
   - Figur 4 eine erfindungsgemäße Konfigurationsvorrichtung und
   - Figur 5 eine Navigationsliste aus einem Schaubild.

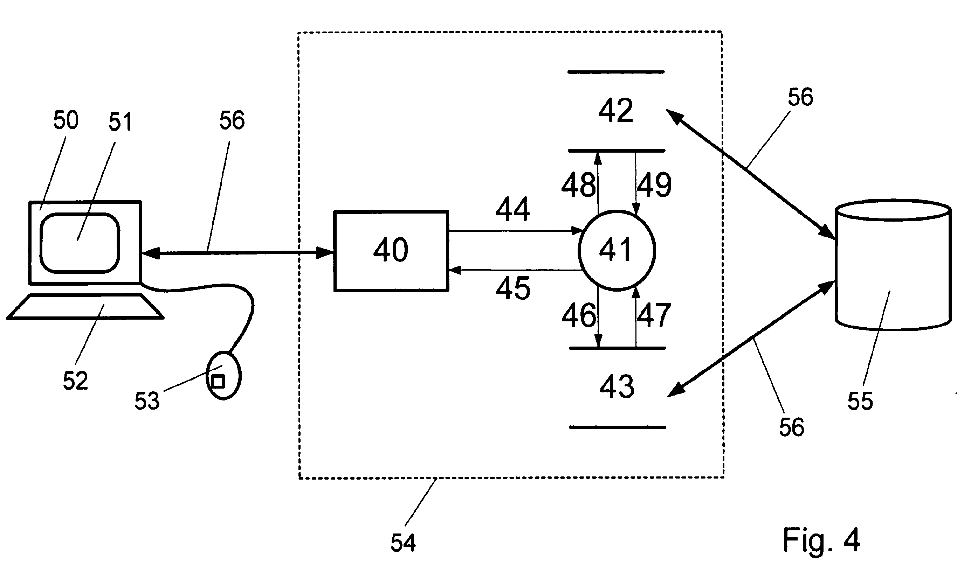

Figur 4 zeigt ein Ausführungsbeispiel einer erfindungsgemäßen Konfigurationsvorrichtung. Ein Konfigurationswerkzeug 54 umfasst ein Auswahlprogramm 41, ein Ein-/Ausgabemittel 40, eine Schaubild-Bibliothek 42 und einen Datenspeicher 43, in dem ein Verzweigungsbaum zur Navigation abgelegt ist.

Das Auswahlprogramm 41 ist als Computerprogramm auf einem PC 50 hinterlegt und wird von diesem abgearbeitet. Das Ein-/Ausgabemittel 40 ist in Form eines Bildschirms 51 zum Anzeigen von Daten und Bildern und einer Tastatur 52 und/oder einer Maus 53 zur Eingabe und/oder Auswahl von Daten gegeben. Die Schaubild-Bibliothek 42 und der Datenspeicher 43 sind auf einem Speichermedium 55, beispielsweise einer Festplatte oder einer CD-ROM hinterlegt. Pfeile verdeutlichen den Datenaustausch 56 zwischen den physikalischen Geräten und den Symbolen im Datenflussdiagramm des Konfigurationswerkzeugs 54.

Alternativ oder zusätzlich ist als Ausgabemittel ein Drucker oder eine Internet-Anschluss vorgesehen. Alternativ oder zusätzlich ist als Eingabemittel eine Spracheingabe-Vorrichtung oder ein Internet-Anschluss eingerichtet.

Im Konfigurationswerkzeug 54 läuft das Auswahlprogramm 41 ab, das zu einer gewünschten Konfiguration einer Anlage das Schaubild der richtigen Verschaltung der benötigten Komponenten liefert.

Das Auswahlprogramm startet hierzu mit einem Start-Schaubild, das die Anlage mit minimalem Komponentenumfang, minimal möglicher Funktionalität und minimaler Sicherheitskategorie darstellt.

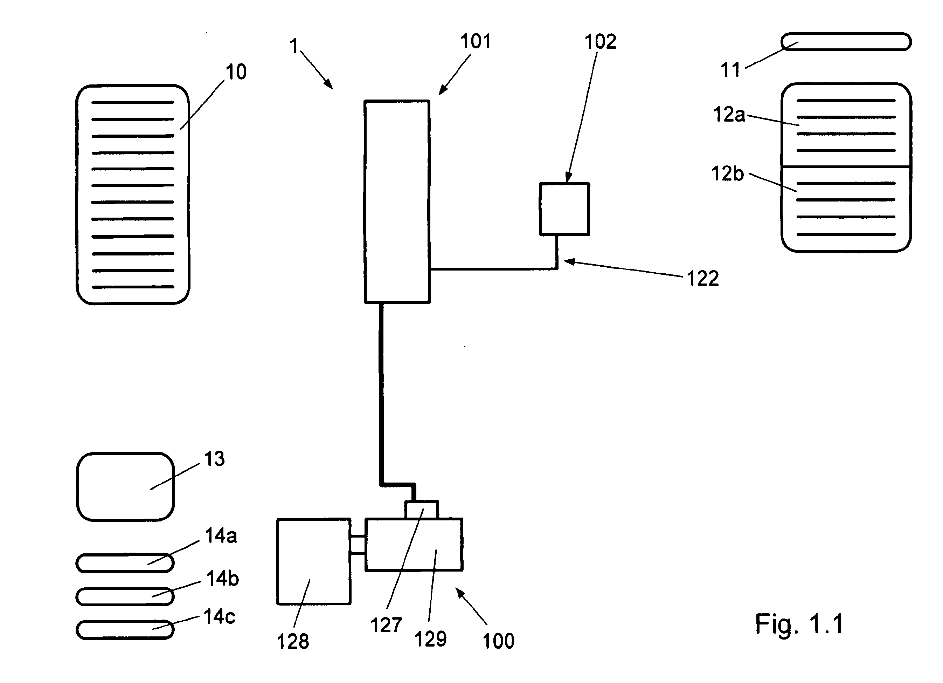

Figur 1.1 zeigt schematisch ein Start-Schaubild mit einem Schaubild 1 und verschiedenen Schaftflächen und Informationsfenstern, die später erläutert werden.

Das Schaubild 1 zeigt die funktionsfähige und sicherheitstechnisch ordnungsgemäße Verschaltung einer Antriebseinheit 100 mit einem Frequenzumrichter 101 und einem Sicherheitsschaltgerät 102.

Ausgehend von diesem Start-Schaubild wählt ein Benutzer über das Eingabemittel 40 einen Konfigurationsbefehl 44. Ein solcher Konfigurationsbefehl 44 ist beispielsweise die Hinzunahme einer Komponente, etwa einer zusätzlichen Antriebseinheit, einer Steckkarte für den Umrichter 101, einer Bremse, eines Winkelgebers oder eines Schaltgeräts, oder die Hinzunahme einer Sicherheitsfunktionalität, beispielsweise einer sicheren Kommunikation, einer sicheren Geschwindigkeitsüberwachung oder einer sicheren Positionsüberwachung, oder der Wechsel zu einer anderen Sicherheitskategorie, beispielsweise einer Kategorie nach DIN EN ISO 13849-1 oder EN 954-1 oder EN 60204-1.

Das Auswahlprogramm 41 registriert den Konfigurationsbefehl 44 und gibt diesen als Navigationsschritt 46 in Form einer Anfrage an den Datenspeicher 43, der den Verzweigungsbaum enthält. Der Datenspeicher 43 gibt als Antwort auf die Anfrage 46 die Identifikationsnummer 47 desjenigen Schaubilds zurück, zu dem man im Verzweigungsbaum vom aktuellen Schaubild mit dem Navigationsschritt 46 gelangt. Diese Identifikationsnummer 47 wird vom Auswahlprogramm 41 als aktualisierte Identifikationsnummer übernommen. Das Auswahlprogramm 41 sendet sodann eine Anfrage 48 mit der aktualisierten Identifikationsnummer an die Schaubild-Bibliothek 42 und erhält als Antwort 49 das zugehörige Schaubild. Dieses Schaubild wird zur Ausgabe 45 an das Ausgabemittel 45 ausgegeben und auf dem Bildschirm 51 dargestellt.

Somit ist ein Zyklus beendet, und der Benutzer kann einen neuen Konfigurationsbefehl 44 eingeben, der nun das aktualisierte Schaubild modifiziert, oder die Konfiguration beenden und das endgültige Schaubild ausdrucken.

Die möglichen Schaubilder, die mit dem Konfigurationswerkzeug 54 erzeugbar sind, sind ausnahmslos in der Schaubild-Bibliothek 42 abgelegt.

Bei einem weiteren Ausführungsbeispiel ist der Verzweigungsbaum in der Programmstruktur des Auswahlprogramms kodiert.

Der Aufbau eines Schaubildes wird anhand der schematischen Darstellung in Figur 1.1 erläutert.

Die Darstellung enthält einen Verschaltungsplan 1. Der Verschaltungsplan 1 zeigt bei jedem Schaubild eine funktionstüchtige Verschaltung von Komponenten einer Anlage nach sicherheitstechnischen Aspekten. Hierbei werden jeweils die verwendeten Komponenten abgebildet und die notwendigen elektrischen Verbindungsleitungen zwischen diesen durch Linien angezeigt.

In Figur 1.1 ist eine Antriebseinheit 100, ein Umrichter 101 und ein Sicherheitsschaltgerät 102 gezeigt. Der Umrichter 101 ist mit dem Sicherheitsschaltgerät 102 über eine sichere 24V Versorgungsleitung 122 verbunden. Der Umrichter 101 ist mit der Antriebseinheit 100 über eine Energieleitung für einen Motor 120 verbunden. Die Phasen der Energieleitung für einen Motor 120 sind hierbei als eine gemeinsame Linie eingezeichnet. Da die Energieleitung für einen Motor 120 ein anderes Kabel erfordert als die sichere 24V Versorgungsleitung 122, insbesondere einen anderen Leitungsquerschnitt, ist in der Darstellung eine andere Linienstärke gewählt.

Die Antriebseinheit 100 setzt sich aus mehreren Teilen zusammen: Ein Motor 129 ist mit einem Getriebe 128 verbunden und trägt einen Anschlusskasten 127. Der Anschluss der Energieleitung für einen Motor hat am Anschlusskasten 127 der Antriebseinheit 129 zu erfolgen, weshalb die entsprechende Linie 122 dort endet.

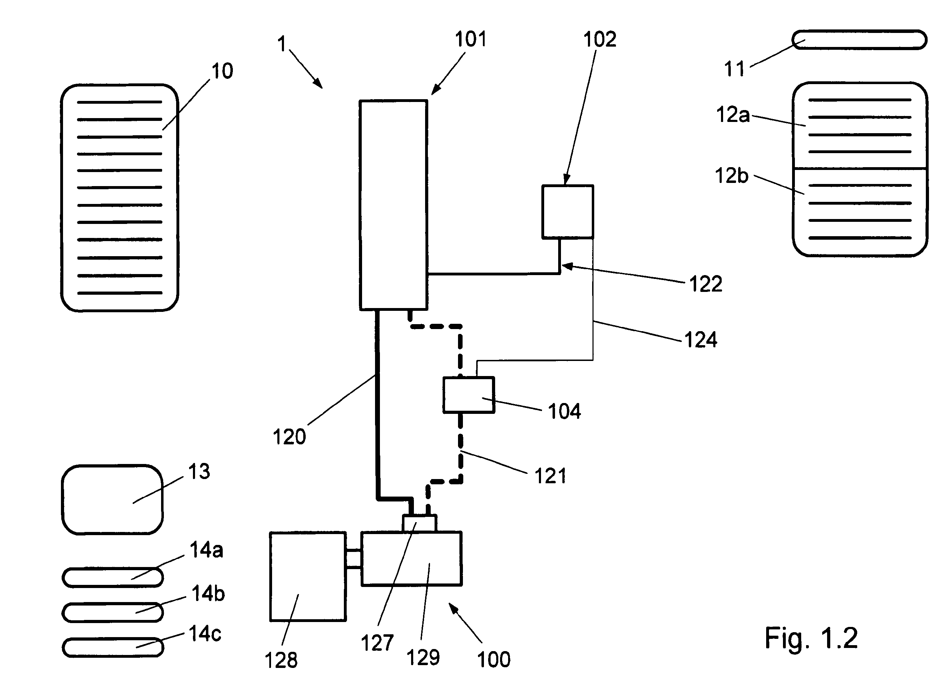

Die Figuren 1.2 bis 1.13 zeigen beispielhaft Schaubilder zu weiteren Anlagen-Konfigurationsvarianten.

Figur 1.2 zeigt eine Anlage wie in Figur 1.1, bei der zusätzlich eine nicht gezeigte Bremse am Motor 129. Die Bremse erfordert eine Energieleitung für eine Bremse 121, die ebenfalls gezeigt ist. Diese Energieleitung für eine Bremse 121 wird durch einen nun erforderlichen Schütz 104 freigegeben oder unterbrochen, der wiederum durch einen Steuer-/Rückmeldekanal 124 über ein Sicherheitsschaftgerät 102 angesteuert wird. Das Sicherheitsschaltgerät 102 wird durch eine sichere 24V Versorgungsleitung 122 aus dem Umrichter 101 versorgt.

Der Verschaltungsplan des Schaubild trägt diesen Erfordernissen Rechnung und zeigt die richtige, funktionsfähige Verschaltung. Da die Bremse im Motor 129 - wie der Motor 129 selbst - über den Anschlusskasten 127 angeschlossen wird, endet die Linie 121 dort.

Da die Energieleitung für die Bremse 121 andere physikalische Eigenschaften hat als die Energieleitung für einen Motor 120, insbesondere zweiadrig statt dreiadrig, ist sie in einem anderen Linienstil, hier gestrichelt, dargestellt.

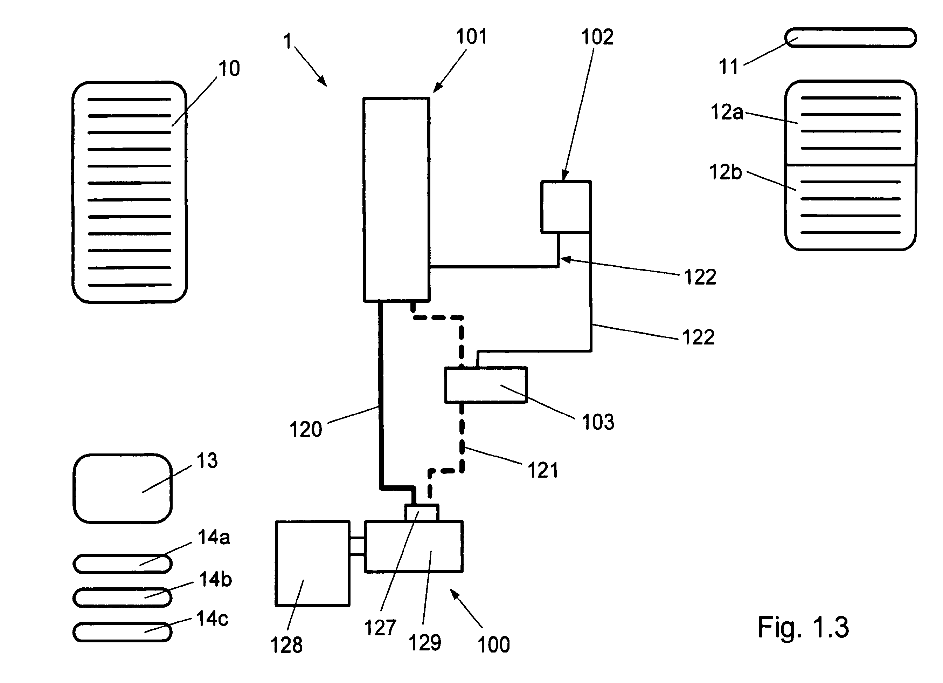

Bei der Anlage nach Figur 1.3 wurde der Schütz 104 aus Figur 1.2 durch ein Bremsmodul 103 ersetzt. Dieses Bremsmodul 103 erfordert eine sichere 24V Versorgungsleitung 122 aus dem Sicherheitsschaltgerät 102.

Mit der Anlage nach Figur 1.3 ist zusätzlich eine Antriebssicherheitsfunktion sichere Bremsenansteuerung realisierbar. Dies wird in einem zusätzlichen Eintrag in der Liste 12a, 12b angezeigt.

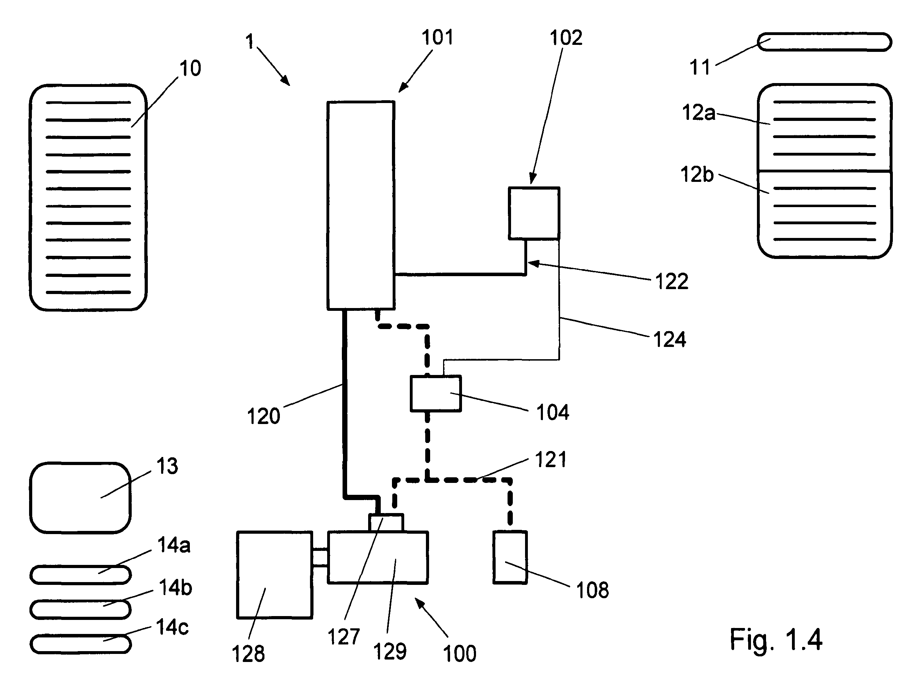

Bei der Anlage nach Figur 1.4 ist zusätzlich zu der Anlage nach Figur 1.2 eine zweite Bremse 108 vorgesehen. Diese wird aus dem Umrichter 109 über einen Abzweig aus der Versorgungsleitung für eine Bremse 121 versorgt und über den Schütz 104 geschaltet. Die zusätzliche Bremse 108 wird auf der, der Abtriebsseite des Motors 129 abgewandten Seite montiert. Dies wird durch die Anordnung der Bremse 108 relativ zu der Antriebseinheit 100 in dem Verschaltungsplan symbolisch dargestellt.

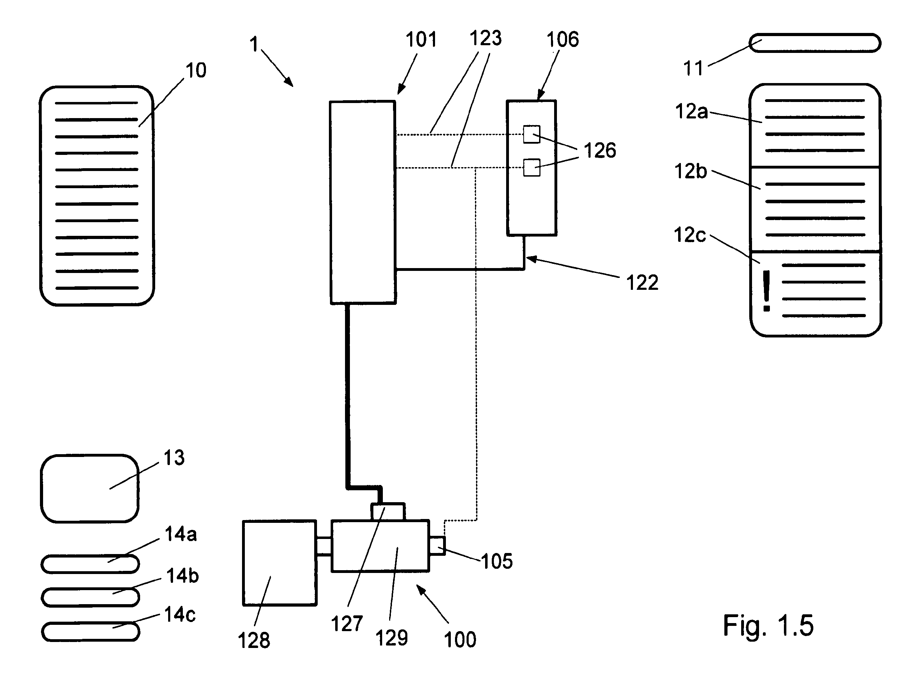

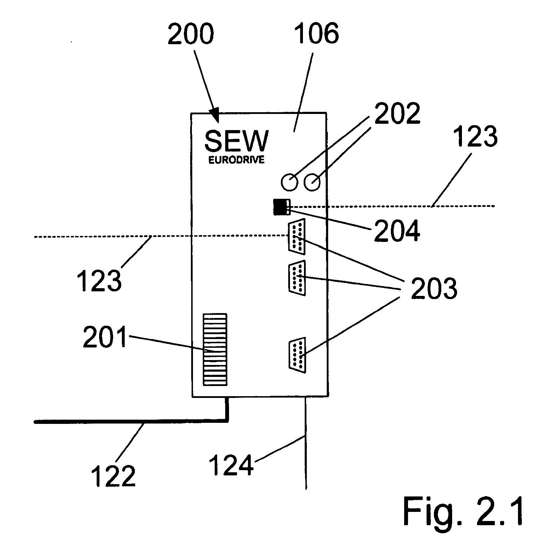

Bei der Anlagen nach Figur 1.5 ist zusätzlich zu der Anlage nach Figur 1.1 ein Geber 105 vorgesehen, mit dem die Position der Rotorwelle des Motors 129 bestimmbar ist. Der Geber wird über eine Signalleitung für einen Winkelgeber 123 mit dem Umrichter und einem Sicherheitselement in Form eines Sicherheits-Universalgeräts 106 verbunden. Hierbei ist das Sicherheits-Universalgerät 106 in fotoähnlicher Weise wie in Figur 2.1 angedeutet abgebildet. Insbesondere ist die Frontansicht dargestellt, auf der optisch wahrnehmbare Merkmale des Sicherheits-Universalgeräts wie Schriftzüge 200 oder Logos, DIP-Schalter 201 und LED-Anzeigen 202 in der Weise abgebildet sind, wie sie dem Betrachter des Sicherheits-Universalgeräts 106 erscheinen. Weiter sind die Anschlussmöglichkeiten, hier RS232-Anschlüsse und Modularbuchsen für den Ethernet-Anschluss, stilisiert oder fotoähnlich so abgebildet, dass der Benutzer ohne Weiteres erkennt, an welchen Anschluss welche Leitung anzuschließen ist. Hierzu sind die Linien 123, die die jeweiligen Leitungen repräsentieren, bis zu dem betreffend Anschluss geführt. Andere Linien 122, 124, bei denen der Anschluss unzweifelhaft ist, enden an der Begrenzung des Sicherheits-Universalgeräts.

Das Sicherheits-Universalgerät 106 in Figur 1.5 verfügt über einen weiteren Steckkontakt, der über eine Signalleitung für einen Winkelgeber mit dem Umrichter 101 zu verbinden ist. Das Sicherheits-Universalgerät 106 wird zudem über eine sichere 24V Versorgungsleitung 122 aus dem Umrichter 101 versorgt.

Die Liste der Antriebssicherheitsfunktionen 12a, 12b ist im Vergleich zu der nach Figur 1.1 deutlich länger und umfasst nun Funktionen, die mit dem Geber realisierbar sind: sichere Drehzahlüberwachung, sicher begrenzte Drehzahl, sicher begrenztes Schrittmaß und weitere. Das Wort "sicher" bezieht sich dabei jeweils auf die gewählte Sicherheitskategorie.

Die dargestellte Anlage erfülft die Vorgaben der Sicherheitskategorie 3, wenn der Geber 105 formschlüssig mit der Rotorwelle verbunden ist. Daher enthält die Liste der Antriebssicherheitsfunktionen 12a, 12b eine zusätzliche Sicherheitswarnung 12c, dass der Geber 105 formschlüssig anzubauen ist.

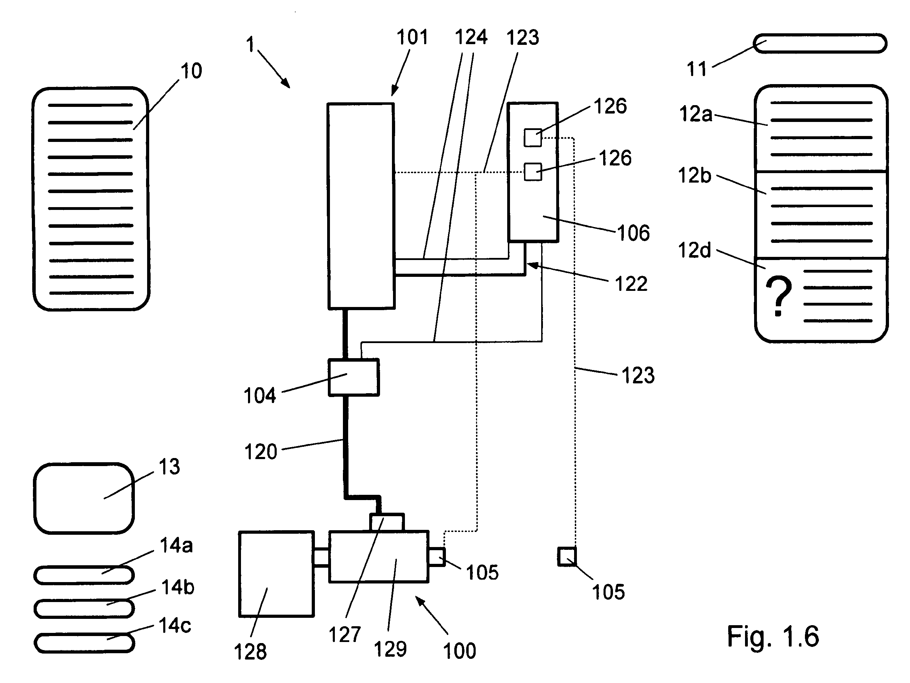

Bei der Anlage nach Figur 1.6 ist im Vergleich zu Figur 1.5 zusätzlich ein weiterer Geber 105 vorgesehen sowie ein Schütz 104 zum Abschalten der Energieleitung für einen Motor 120. Somit ist mit der Anlage die Sicherheitskategorie 4 umsetzbar. Hierzu muss das Sicherheits-Universalgerät 106 zusätzlich über einen Steuer-/Rückmeldekanal 124 mit dem Umrichter 101 verbunden werden. Hierzu wird das optionale Zustandssignal des Umrichters "sichere Abschaltung" genutzt, was mit einem Erweiterungshinweis 12d im Schaubild angezeigt wird.

Der Schütz 104 wird über einen Steuer-/Rückmeldekanal 124 vom Sicherheits-Universalgerät 106 angesteuert.

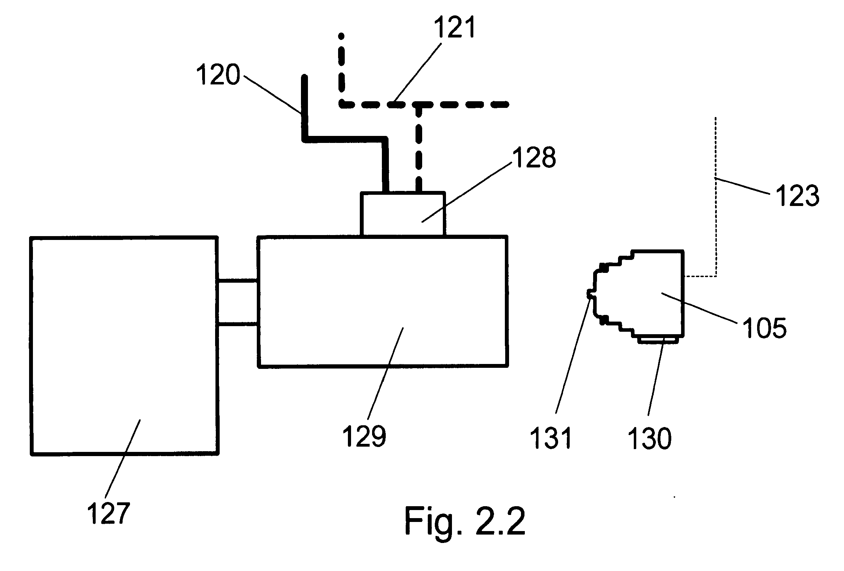

Um die Montage der Geber 105 zu erleichtern und Montagefehler auszuschließen, sind die Geber 105 fotoähnlich wiedergegeben, wie in der Figur 2.2 gezeigt. An dem Geber 105 sind charakteristische Merkmale wie Geberfuß 130 und Geberwelle 131 eingezeichnet, die ein Ausrichten des Gebers 105 zur Montage erleichtern. Der Geber ist nun in Bezug auf den Motor 129 und das Getriebe 127 in der Lage und Position wiedergegeben, wie er zu montieren ist.

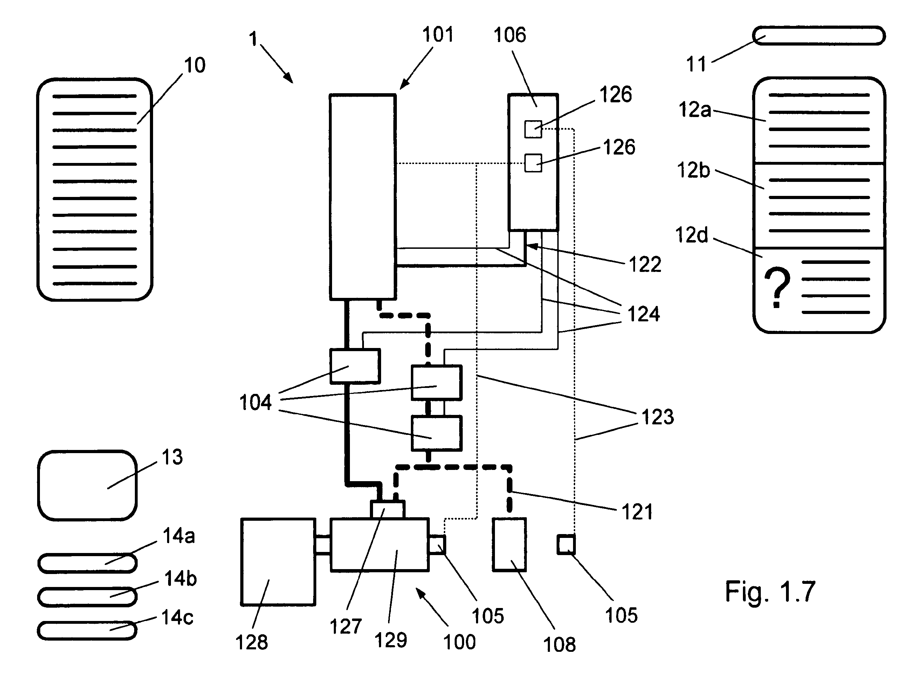

Figur 1.7 zeigt ein weiteres Beispiel eines Schaubilds, welches der Sicherheitskategorie 4 nach DIN EN ISO 13489-1 genügt. Zusätzlich zu der Anlage nach Figur 1.6 ist eine Bremse im Motor 129 und eine zweite Bremse 108 vorgesehen, die über zwei Schütze 104 angesteuert werden.

Die Abfolge der Elemente Motor 129, Geber 105, Bremse 108 und Geber 105 von links nach rechts verdeutlicht die Reihenfolge des Anbaus von Gebern 105 und Bremse 108 am Motor 129.

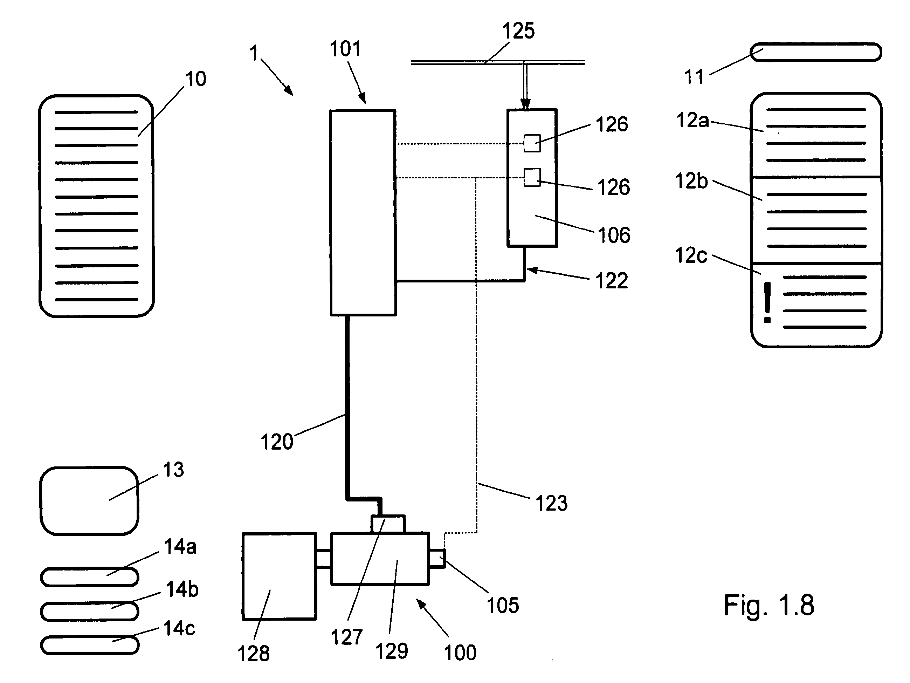

Bei der Anlage nach Figur 1.8 ist im Vergleich zur Anlage nach Figur 1.5 zusätzlich eine Busleitung 125 vorgesehen, die mit dem Sicherheits-Universalgerät 106 verbunden ist. Somit ist mit der Anlage nach Figur 1.8 zusätzlich die **Antriebssicherheitsfunktion** sichere Kommunikation erreicht. Diese Antriebssicherheitsfunktion ist daher auf der Liste 12a, 12b zusätzlich vermerkt. Wegen des formschlüssigen Geberanbaus ist wieder eine Sicherheitswarnung 12c aufgeführt.

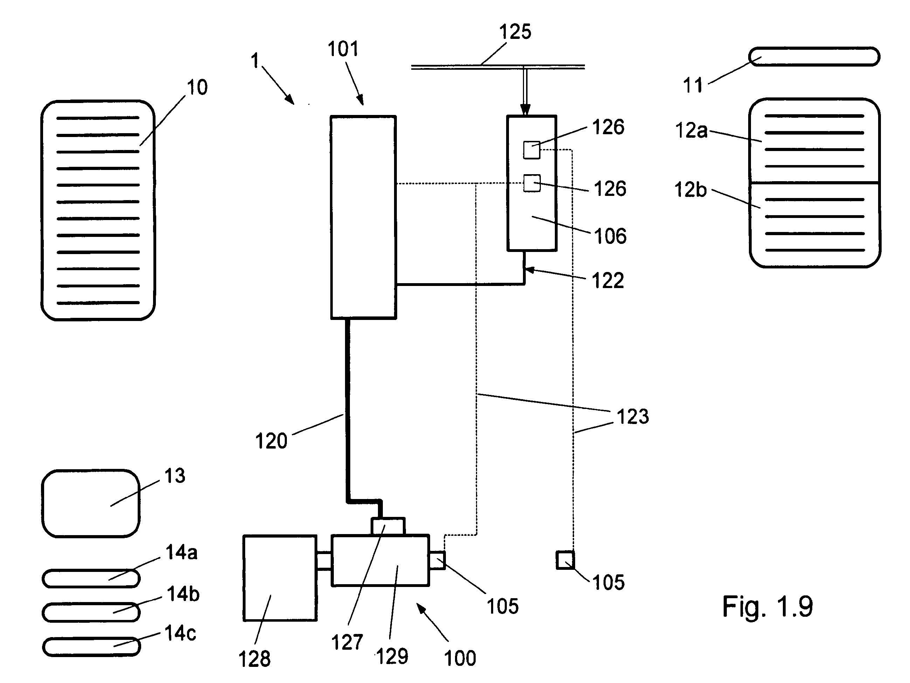

Bei der Anlage nach Figur 1.9 ist gegenüber der Anlage nach Figur 1.8 ein zusätzlicher Geber 105 vorgesehen. Dadurch ist ein formschlüssiger Anbau des ersten Gebers 105 nicht mehr erforderlich, und die Sicherheitswarnung 12c entfällt.

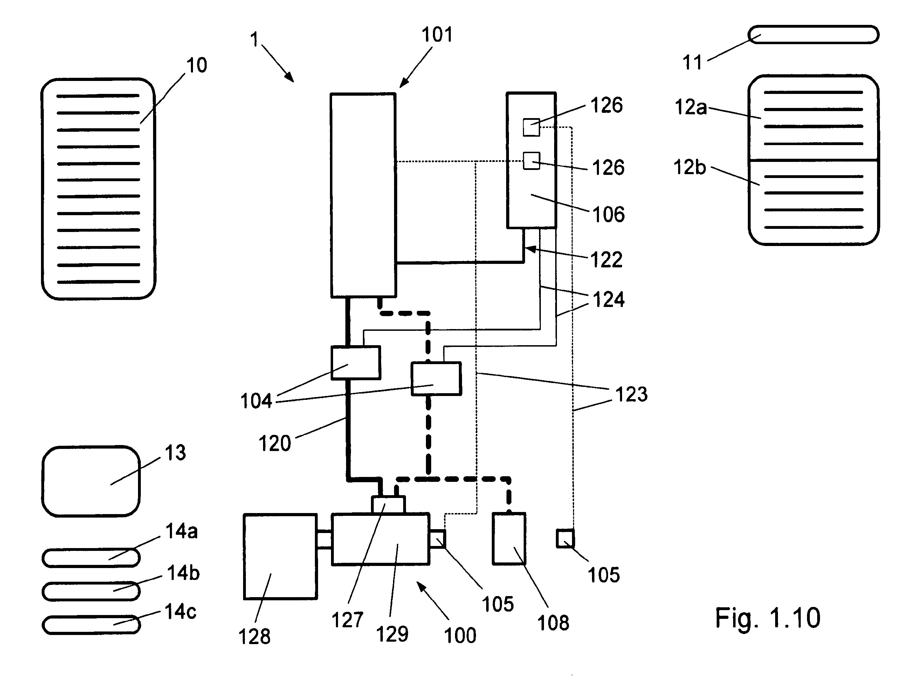

Die Anlage nach Figur 1.10 genügt im Gegensatz zu der Anlage nach Figur 1.7 nur den Anforderungen der Sicherheitskategorie 3, da die Abschaltung der Energieleitung für eine Bremse 121 nur über einen einfachen Schütz erfolgt. Es muss somit nicht das optionale Zustandssignal des Umrichters 101 "sichere Abschaltung" genutzt werden, weshalb der Signal-lRückmeldekanal 124 zwischen Umrichter 101 und Sicherheits-Universalgerät 106 entfällt. Der Hinweis 12d auf die Nutzung des Zustandssignals kann somit auch entfallen.

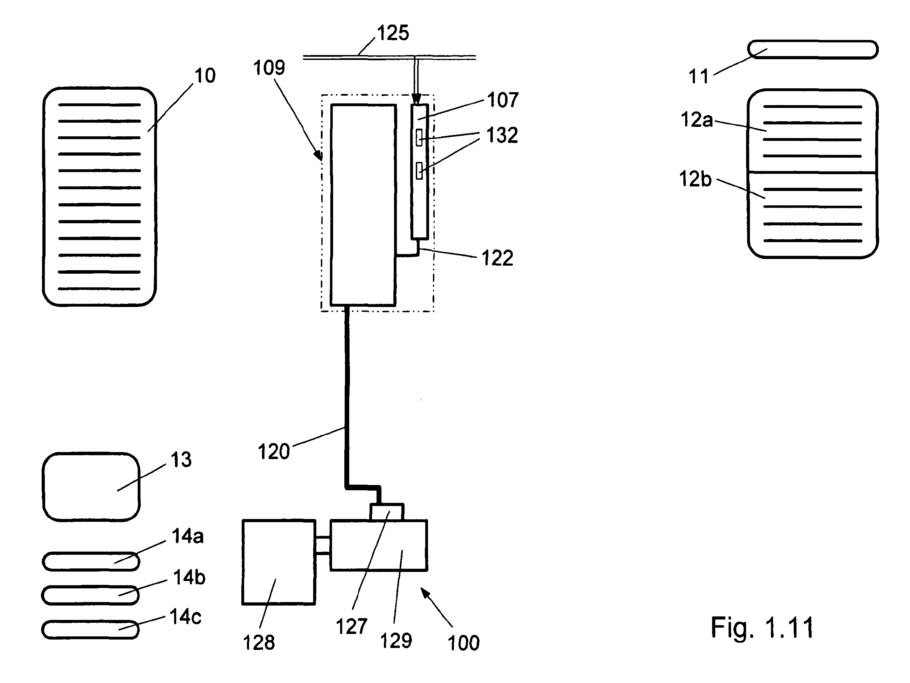

Bei der Anlage nach Figur 1.11 erfolgt die Abschaltung im Vergleich zu der Anlage nach Figur 1.1 nicht über das Sicherheitsschaltgerät 102, sondern über ein Kommando aus der Busleitung 125. Hierzu ist eine Optionssteckkarte 107 vorgesehen, an die die Busleitung 125 angeschlossen ist. Die Optionssteckkarte 107 ist Ober eine sichere 24V Versorgungsleitung an den Umrichter 101 angeschlossen. Die Optionssteckkarte 107 ist fotoähnlich mit Steckkontakten 132 dargestellt, um bei weiteren Konfigurationen Anschlussleitungen aufnehmen zu können.

Die Optionssteckkarte 107 wird in einen Steckplatz des Umrichters 101 eingesteckt und bildet mit diesem für den Betrachter ein gemeinsames Gerät. Dies wird durch eine Gehäuselinie 109 dargestellt, die beide Komponenten umschließt.

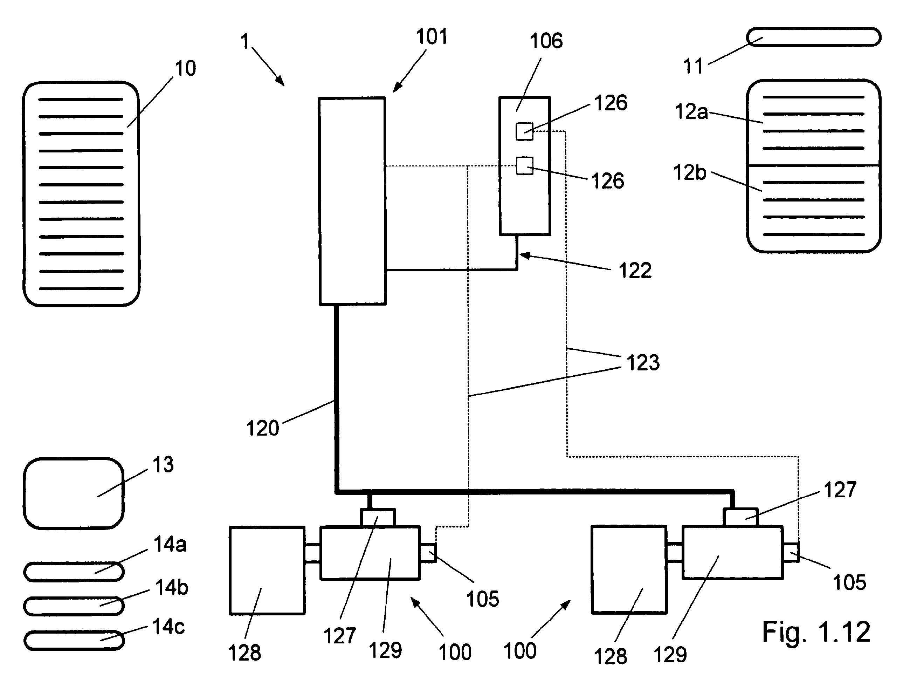

Bei der Anlage nach Figur 1.12 ist im Vergleich zu der Anlage nach Figur 1.5 eine zusätzliche Antriebseinheit 100 mit einem weiteren Geber 105 vorgesehen. Die Energieleitung für einen Motor 120 weist daher einen Abzweig auf, der mit dem Anschlusskasten 127 der weiteren, rechten Antriebseinheit 100 verbunden ist. Der weitere, rechte Geber 105 ist mit dem zweiten Steckkontakt des Sicherheits-Universalgeräts 106 verbunden.

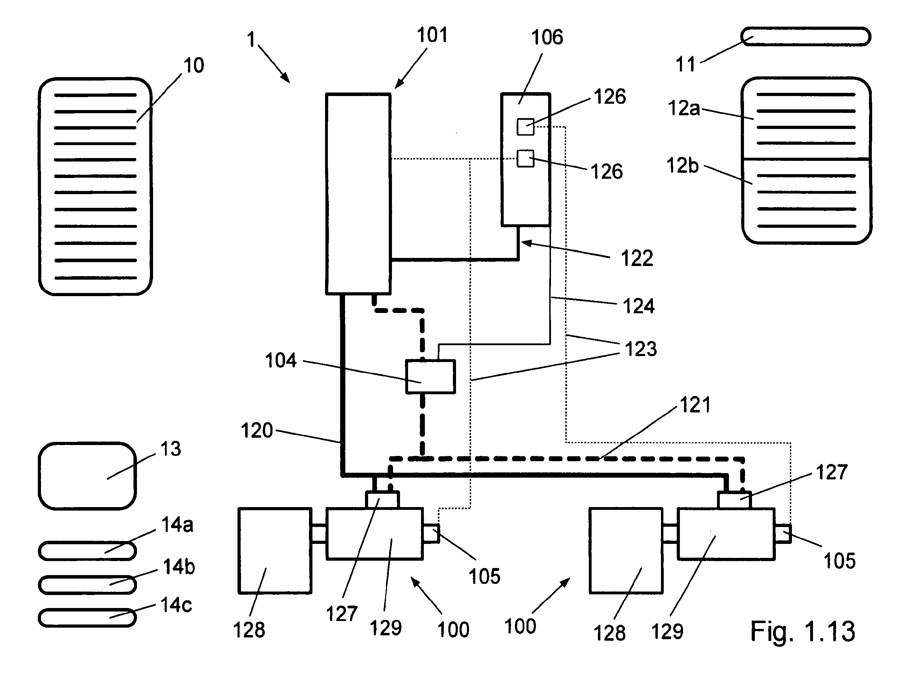

Bei der Anlage nach Figur 1.13 ist im Vergleich zu der Anlage nach Figur 1.12 zusätzlich bei jeder Antriebseinheit 100 eine Bremse vorgesehen, die über eine gemeinsame Energieleitung für eine Bremse 121 versorgt werden. Die Energieleitung für eine Bremse 121 wird durch einen Schütz 104 geschaltet, der über einen Steuer-/Rückmeldekanal 124 vom Sicherheits-Universalgerät 106 angesteuert wird.

Der Vergleich der Schaubilder aus Figur 1.1 bis 1.13 zeigt, dass jeweils gleiche Komponenten mit demselben Bild jeweils an derselben Position im Schaubild abgebildet sind, und dass gleiche Leitungen mit gleichem Linienstil und entlang derselben Bahn abgebildet sind. Dies erleichtert dem Betrachter, Unterschiede aufzufinden. Die Darstellung ist insbesondere so gewählt, dass selbst bei Schwarz-Weiß-Ausdruck alle Unterschiede erkennbar sind.

Die Schaubilder nach Figur 1.1 bis 1.13 weisen weiter auf der rechten Seite eine Identnummer 11 auf, die zur eindeutigen Kennzeichnung des Schaubildes dient. Diese Identnummer 11 setzt sich zusammen aus einer Versionsnummer, einem Kürzel für das Erstelldatum, einem Kürzel für den Ersteller und einer laufenden Nummer.

Unterhalb der Identnummer 11 sind die mit der gezeigten Anlage realisierbaren Antriebssicherheitsfunktionen 12a, 12b aufgeführt. Beispiele hierfür umfassen Stopp-Kategorie 0 oder Stopp-Kategorie 1 oder sichere Drehzahlüberwachung oder sicher begrenzte Drehzahl oder sichere digitale Eingänge oder weitere Funktionen. Diese Antriebssicherheitsfunktionen beschreiben jeweils Funktionen wie Stopp, Drehzahlüberwachung, digitale Aus- oder Eingänge oder weitere Funktionen und die mit der gezeigten Anlage erreichbare Sicherheitskategorie nach DIN EN ISO 13489-1.

Im linken Teil der Schaubildes nach Figur 1.1 bis 1.13 ist eine Navigationsliste 10 dargestellt. Diese Navigationsliste ermöglicht dem Benutzer, zu einem Schaubild zu gelangen, das eine andere Anlage darstellt.

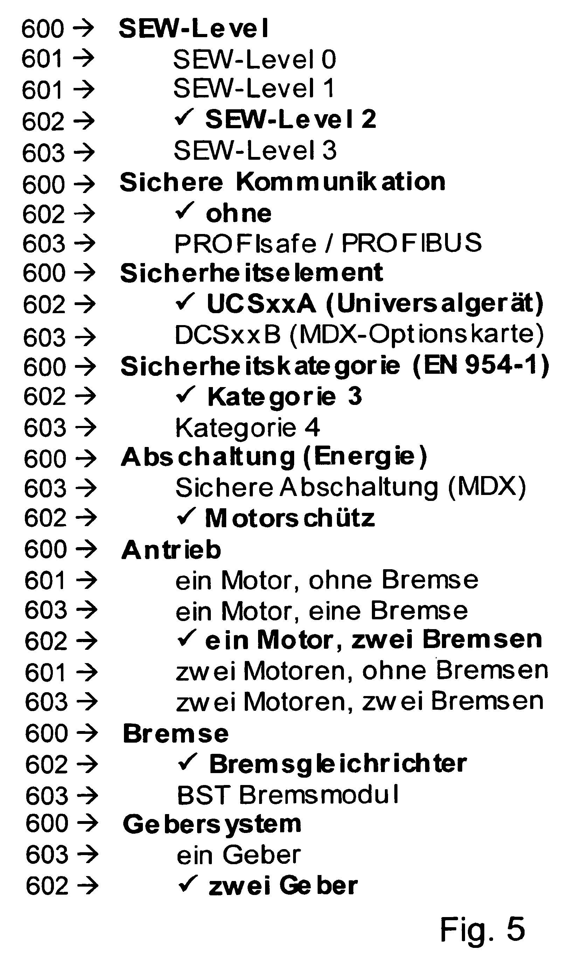

Ein Beispiel einer Navigationsliste 10 zeigt Figur 5. Dargestellt ist eine gegliederte Liste mit Oberbegriffen 600 und Ausprägungen 601, 602, 603. Die Ausprägungen 601, 602, 603 ergeben die möglichen Varianten von Anlagen, die mit dem Konfigurationswerkzeug erstellbar sind.

Die Ausprägungen 601, 602, 603 dienen zur Beschreibung der im Verschaltungsplan 1 des Schaubildes gezeigten Anlage.

Diejenigen Ausprägungen 602, die die Merkmale der gezeigten Anlage wiedergeben, sind durch ein spezielles Symbol, hier einen Haken, und Fettdruck kenntlich gemacht. Als Symbol kann auch eine Unterstreichung, ein Rahmen, ein Pfeil, ein Schrägdruck oder eine andere typographische Besonderheit gewählt sein, die bei einem Schwarz-Weiß-Ausdruck die Ausprägungen 602 von den nicht zutreffenden Ausprägungen 601, 603 unterscheidet.

Die Navigationsliste enthält Ausprägungen 603, die als aktive Links gestaltet sind. Der Benutzer kann durch Auswählen einen aktiven Links die Konfiguration der Anlage verändern. Beispielsweise kann in Figur 5 durch Auswählen der Ausprägung "Kategorie 4" eine andere Sicherheitskategorie mit der Anlage realisiert werden. Gegebenenfalls wird bei dieser Auswahl eine Komponente durch eine andere ersetzt, die den Anforderungen der Kategorie 4 nach DIN EN ISO 13489-1 genügt. Beispielsweise wird durch Auswählen der Ausprägung "BST Bremsmodul" die Komponente "Bremsgleichrichter" gegen die Komponente "BST Bremsmodul" getauscht. Das Auswählen einer Ausprägung hat die Anzeige eines neuen Schaubildes mit einem neuen Verschaltungsplan zur Folge, der die neue Konfiguration wiedergibt.

Ausprägungen 601, die bei einer aktuellen Konfiguration nicht sinnvoll sind, sind in dem betreffenden Schaubild als inaktive Links ausgebildet. Der Benutzer kann diese nicht anwählen, beziehungsweise des Auswahlprogramm zeigt keine Reaktion beim Anwählen der Ausprägungen 601. Beispielsweise verfügt die in Figur 5 beschriebene Konfiguration über einen Bremsgleichrichter, die Ausprägung "ein Motor, ohne Bremse" ist daher nicht sinnvoll und inaktiv. Ebenso sind die Ausprägungen "SEW-Level 0" und "SEW-Level 1" nicht sinnvoll, da Geber vorgesehen sind, für die mindestens SEW-Level 2 umgesetzt sein muss, wie weiter unten beschrieben wird.

Die Navigationsliste 10 ist für alle Schaubilder insofern gleich, als zumindest die Oberbegriffe 600 übereinstimmen. Die Aktion, die durch Auswählen einer Ausprägung 601, 602, 603 erfolgt, also die Aktion, die mit den Ausprägungen verbunden ist, unterscheidet sich jeweils von Schaubild zu Schaubild und hängt von der im Verschaltungsplan jeweils dargestellten Anlage ab.

Bei einem weiteren Ausführungsbeispiel wird zu jedem Oberbegriff ein pull-down-Menü mit allen Ausprägungen angeboten, und die aktuell gewählte Ausprägung wird in diesem Menü angezeigt. Die nicht sinnvollen Ausprägungen werden in dem pull-down-Menü gesperrt.

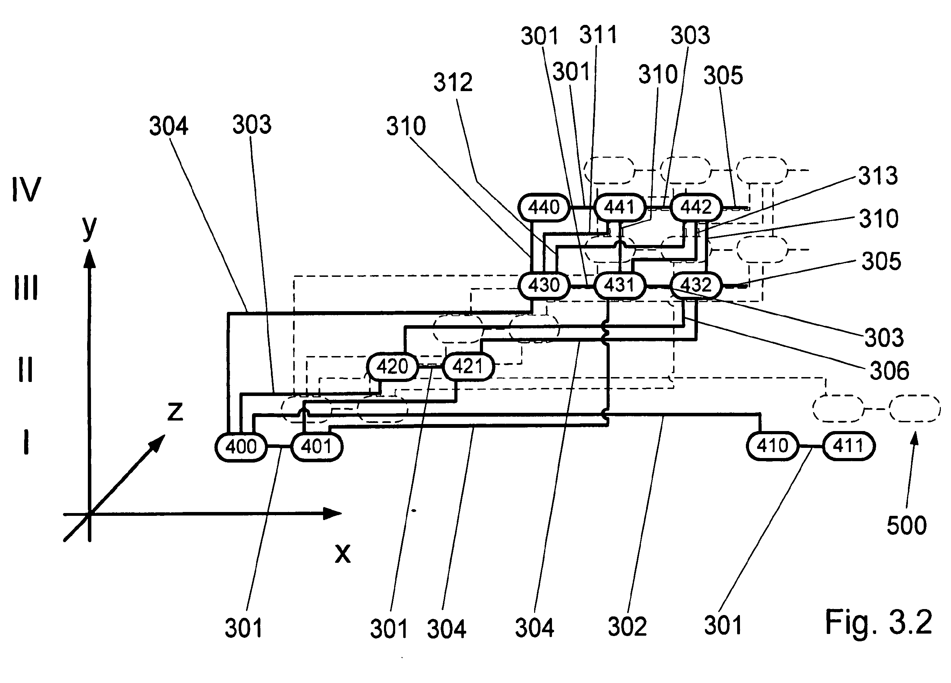

Die Navigation zwischen den verschiedenen Schaubildern, also das iterative Konfigurieren, erfolgt anhand eines Verzweigungsbaums wie er in Figur 3.2 beispielhaft dargestellt ist. Ein solcher Verzweigungsbaum ist im Beispiel in Form der Verweise hinter den Ausprägungen in jedem Schaubild hinterlegt, bei weiteren Ausführungsbeispielen separat hinterlegt.

Figur 3.2 zeigt 12 ovale Verzweigungspunkte 400, 401, 4010, 411, 420, 421, 430, 431, 432, 440, 441 und 442, die für jeweils ein Schaubild stehen. Weitere Schaubilder und Linien 305 sind nicht dargestellt, um eine bessere Übersichtlichkeit zu erreichen.

Es zeigen Schaubild
- 400 eine Antriebseinheit,
- 401 eine Antriebseinheit mit Bremse,
- 410 zwei Antriebseinheiten,
- 411 zwei Antriebseinheiten mit Bremse,
- 420 eine Antriebseinheit mit Busanschluss,
- 421 eine Antriebseinheit mit Busanschluss und Bremse,
- 430 eine Antriebseinheit mit Geber,
- 431 eine Antriebseinheit mit Geber und Bremse,
- 432 eine Antriebseinheit mit Geber, Bremse und Busanschluss,
- 440 eine Antriebseinheit mit Geber in Sicherheitsfunktionalität IV.
- 441 eine Antriebseinheit mit Geber und Bremse in Sicherheitsfunktionalität IV,
- 442 eine Antriebseinheit mit Geber, Bremse und Busanschluss, in Sicherheitsfunktionalität IV.

Ein Benutzer des Konfigurationswerkzeugs kann von einem Schaubild zum nächsten Schaubild entlang der gezeichneten Linien in Navigationsschritten gelangen. Jeder Navigationsschritt in x-Richtung bedeutet dabei die Hinzunahme einer Komponente, jeder Navigationsschritt in y-Richtung die Erhöhung der Sicherheitsfunktionalität um eine Stufe.

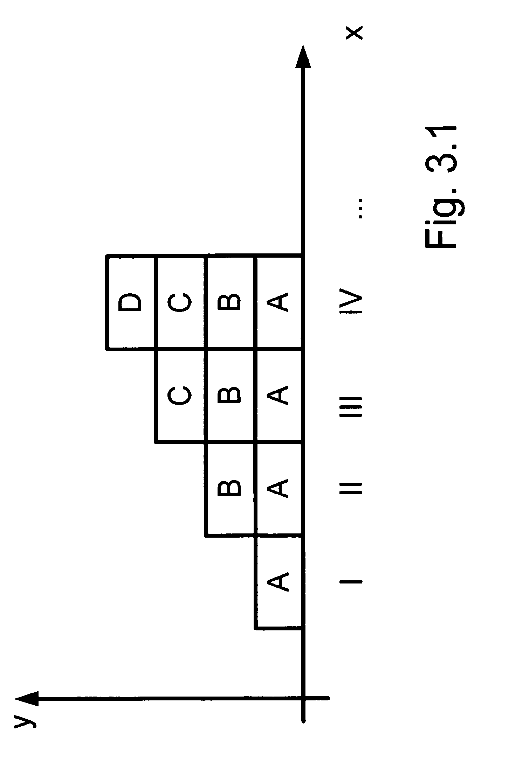

Bei der Sicherheitsfunktionalität handelt es sich um sicherheitsrelevante Merkmale der Anlagen, die zu Gruppen gegliedert sind, wobei die nächsthöhere Sicherheitsfunktionalität die Funktionen der vorhergehenden in sich vereint. Dies ist am Beispiel von vier Sicherheitsfunktionalitäten in Figur 3.1 gezeigt. Weitere Sicherheitsfunktionalitäten sind bei anderen Ausführungsbeispielen vorgesehen. Ist eine bestimmte Sicherheitsfunktionalität gewählt, so bezieht sich diese auf alle beweglichen Achsen der Anlage, beispielsweise eines Mehrachssystems. Also ist beispielsweise entweder für alle Bewegungen eine sichere Geschwindigkeitsüberwachung installiert oder für keine.

Figur 3.1 zeigt diagrammatisch den Bezug der Sicherheitsfunktionalitäten I bis IV untereinander. Die Sicherheitsfunktionalitäten sind aufsteigend von links nach rechts angeordnet und enthalten die Merkmale A bis D wie gezeigt. Die nächsthöhere Sicherheitsfunktionalität enthält also mindestens die Merkmale der vorangegangenen und ein weiteres Merkmal.

Es bedeuten
- A sichere Abschaltung,
- B sichere Kommunikation,
- C sichere Geschwindigkeiten,
- D sichere Positionen.

Wie aus der Figur 3.1 ersichtlich, stellt die Sicherheitsfunktionalität I mit dem Merkmal A eine Sicherheits-Grundfunktionalität dar, aus denen die anderen Sicherheitsfunktionalitäten II, III, IV durch sukzessives Hinzunehmen der Merkmale B, C, D gebildet werden. Somit ist eine Rangordnung von I als niedrigste Sicherheitsfunktionalität zu IV als höchste Sicherheitsfunktionalität gebildet. Weitere Sicherheitsfunktionalitäten sind in anderen Ausführungsbeispielen vorgesehen.

Die Sicherheitsfunktionalität III liegt beispielsweise vor, wenn bei der betreffenden Anlage alle Antriebe sicher abschaltbar sind, alle Kommunikationen sicher erfolgen und alle Geschwindigkeiten, auch Winkelgeschwindigkeiten, sicher überwachbar sind. Mit eingeschlossen ist der Fall, dass überhaupt keine Kommunikation erfolgt. Der Einsatz eines Gebers bedingt, dass mindestens die Sicherheitsfunktionalität III realisiert werden muss, da mit dem Geber eine Überwachung von Winkelgeschwindigkeiten überwachbar ist, und diese entsprechend einer Sicherheitskategorie eingerichtet wird.

Der Wechsel von Sicherheitsfunktionalität III zu Sicherheitsfunktionalität IV erfordert beispielsweise, dass die eingesetzten Geber Absolutwertgeber sind oder dass zumindest eine Auswerteeinheit für Inkrementgeber vorgesehen sind zur Bestimmung der Position jeder Bewegung. Insbesondere bei Mehrachssystemen ist somit eine Überwachung jeder Bewegungsachse auf gleichem Sicherheitsniveau erreicht.

Die Sicherheitsfunktionalitäten I, II, 11, IV entsprechen den "SEW-Leveln" "SEW-Level 0", "SEW-Level 1", "SEW-Level 2", "SEW-Level 3" in Figur 5.

Ausgangspunkt der Konfiguration nach Figur 3.2 ist das Schaubild 400, das die einfachst mögliche Anlage darstellt. Diese Schaubild ist in Figur 1.1 dargestellt.

Durch Hinzunahme einer Bremse 301 gelangt der Benutzer zum Schaubild 401, dargestellt in Figur 1.2.

Durch Hinzunahme eines zweiten Motors 302 gelangt der Benutzer vom Schaubild 400 zum Schaubild 410.

Durch Hinzunahme einer Bremse 301 gelangt der Benutzer vom Schaubild 410 zum Schaubild 411.

Von Schaubild 411 gelangt der Benutzer durch Hinzunahme eines Gebers zu Schaubild 1.12. Dieses ist in der Ebene der Sicherheitsfunktionalität III oder IV angeordnet. Der Benutzer bewegt sich somit um zwei Schritte in y-Richtung.

Von Schaubild nach Figur 1.12 gelangt der Benutzer durch Hinzunahme von je einer Bremse für jeden Motor zum Schaubild nach Figur 1.13.

Durch Hinzunahme eines Busanschlusses 303 gelangt der Benutzer zum Schaubild 420, dargestellt in Figur 1.11. Eine solche Anlage umfasst die Funktionalität Kommunikation. Daher gelangt der Benutzer durch den Navigationsschritt 303 eine Stufe höher in y-Richtung zur Stufe II der Sicherheitsfunktionalität.

Durch Hinzunahme einer Bremse 301 gelangt der Benutzer vom Schaubild 420 zum Schaubild 421 und von diesem durch Hinzunahme eines Gebers 304 zum Schaubild 432. Durch Hinzunahme eines Gebers 304 gelangt der Benutzer vom Start-Schaubild 400 zum Schaubild 430, dargestellt in Figur 1.5, von dort durch Hinzunahme einer Bremse zu Schaubild 431 und von dort durch Hinzunahme eines Busanschlusses zu Schaubild 432.

Durch den Navigationsschritt 310, die Erhöhung der Sicherheitsfunktionalität, gelangt der Benutzer vom Schaubild 430, 431 oder 432 jeweils zu dem Schaubild 440, 441, 442.

Der Benutzer kann in einem Ausführungsbeispiel auch Navigationsschritte zusammenfassen.

Beispielsweise gelangt der Benutzer durch Hinzunahme eines Gebers und einer Bremse 306 von Schaubild 430 zu Schaubild 432, durch Erhöhung der Sicherheitsfunktionalität und Hinzunahme einer Bremse 311 von Schaubild 430 zu Schaubild 441, durch Erhöhung der Sicherheitsfunktionalität und Hinzunahme eines Busanschlusses 313 von Schaubild 431 zu Schaubild 442,durch Erhöhung der Sicherheitsfunktionalität und Hinzunahme einer Bremse und eines Busanschlusses 312 von Schaubild 430 zu Schaubild 442. Weitere Kombinationen von Navigationsschritten sind somit dem Fachmann ersichtlich und mit umfasst.

Ein Navigation in z-Richtung in Figur 3.2 bedeutet die Erhöhung der Sicherheitskategorie um Eins. Die zugehörigen Linien sind der Übersichtlichkeit halber nicht dargestellt. Man gelangt durch einen Schritt in z-Richtung zu einem identischen Verzweigungsbaum, bei dem die Schaubilder mit einer erhöhten Sicherheit ausgestattet sind, um der erhöhten Sicherheitskategorie zu genügen.

Beispielsweise gelangt der Benutzer von Figur 1.10 durch Erhöhung der Sicherheitskategorie von 3 auf 4 zum Schaubild nach Figur 1.7.

Die Navigationsschritte entlang der Linien sind in beiden Richtungen möglich.

In der Navigationsliste 10 nach Figur 5 vollzieht ein Benutzer beispielsweise den Navigationsschritt Hinzunehmen einer Bremse 301, indem statt der Ausprägung "ein Motor, ohne Bremse" die Ausprägung "ein Motor, eine Bremse," oder statt der Ausprägung "ein Motor, eine Bremse" die Ausprägung "ein Motor, zwei Bremsen" oder statt der Ausprägung "zwei Motoren, ohne Bremsen" die Ausprägung "zwei Motoren, zwei Bremsen" ausgewählt wird. Die anderen Navigationsschritte werden entsprechend realisiert.

Beispielsweise wird durch Anwählen von "SEW-Level 2" automatisch ein Schaubild mit einem Geber ausgewählt, was je nach Ausgangs-Schaubild einen kombinierten Navigationsschritt darstellen kann.

Beispielsweise wird durch Auswahl der Ausprägung "PROFIsafe/PROFIBUS" automatisch ein Schaubild ausgewählt, das mindestens das "SEW-Level 1" umsetzt. Somit kann, je nach Ausgangs-Schaubild, insbesondere wenn das Ausgangs-Schaubild mit "SEW-Level 0", die Auswahl dieser Ausprägung einen kombinierten Navigationsschritt darstellen.

Unterhalb der Navigationsliste 10 in Figur 1.1 bis 1.13 ist jeweils ein Hilfefeld 13 dargestellt. Im Hilfefeld 13 ist eine Legende zum Verschaltungsplan, eine Erklärung der einzelnen SEW-Level, eine Erklärung der verwendeten Normen oder Projektierungshinweise abrufbar.

Unterhalb des Hilfefelds 13 sind Auswählknöpfe für den Neustart 14a der Konfiguration, das Ausdrucken 14b des aktuellen Schaubilds und das Beenden 14c des Programms vorgesehen.

Obwohl die Navigationsliste 10, das Fenster für die Identnummer 11 und die Liste der Antriebssicherheitsfunktionen 12a, 12b, 12c und/oder 12d bei jedem Schaubild wiederkehren, sind sie nicht in separaten Fenstern abgelegt oder generiert, sondern sind als Bestandteil des jeweiligen Schaubilds abgelegt. Somit ist sichergestellt, dass zu jedem Schaubild immer die richtige Information angezeigt und ausgedruckt wird.

Durch die Identnummer 11 sind die Schaubilder eindeutig identifizierbar. Sie sind somit einzeln ausdruckbar und auf fehlerhafte Verschaltung prüfbar. Insbesondere sind die Schaubilder von einem externen Prüfer, beispielsweise dem Technischen Überwachungsverein TÜV, mit Hinblick auf die eingesetzte Sicherheitsnorm abgeprüft und mit einem Prüfsiegel versehen.

Das Hilfefenster 13 und die Schaltknöpfe 14a, 14b und 14c sind bei einem Ausführungsbeispiel in separaten Fenstern generiert und angezeigt.

Die Schaubilder sind mit Powerpoint oder in html oder als pdf erstellt. Bei einem weiteren Ausführungsbeispiel sind die Schaubilder in einer anderen Sprache erstellt, die Schaubilder mit aktiven Links bereitstellt.

Bei einem Ausführungsbeispiel sind die Schaubilder als html-Dateien auf einer CD-ROM abgelegt, und jedes Schaubild enthält eine Navigationsliste mit Links auf die weiteren Schaubilder zur Umsetzung des Verzweigungsbaums. Somit ist das gesamte Programm auf der CD-ROM abgelegt, und es wird als Mittel zur automatisierten Auswahl die Funktionalität eines Browsers genutzt.

## Patentansprüche

1. Verfahren zum computergestützten Konstruieren einer Anlage mit definierter Sicherheitsstufe, mit den Schritten in zeitlicher Reihenfolge:
1. Bereitstellen einer Vielzahl von Schaubildern (49, 400, 401, 410, 411, 420, 421, 430, 431, 440, 441, 443) von Anlagen in einer computerimptementierten Bibliothek (42), wobei zu jedem Schaubild (49, 400, 401, 410, 411, 420, 421, 430, 431, 440. 441, 443) zusätzlich zumindest die Komponenten (100, 101, 102, 103, 104, 105, 106, 107, 108, 127, 128, 129, 130, 131, 132) der abgebildeten Anlage und eine durch das Schaubild (49, 400, 401, 410, 411, 420, 421, 430, 431, 440, 441, 443) realisierte Sicherheitsstufe, umfassend eine durch das Schaubild (49, 400, 401, 410, 411, 420, 421, 430, 431, 440, 441, 443) realisierte Sicherheitskategorie und/oder eine durch das Schaubild (49, 400, 401, 410, 411, 420, 421, 430, 431, 440, 441, 443) realisierte Sicherheitsfunktionalität (12a, 12b), hinterlegt sind,
2. computergestütztes Auswählen (301, 302, 303, 304, 305, 306, 310, 311, 312, 313) von Komponenten (100, 101, 102, 103, 104, 105, 106, 107, 108, 127, 128, 129, 130, 131, 132) der gewünschten Anlage und von der gewünschten Sicherheitsstufe, umfassend die gewünschte Sicherheitskategorie und/oder die gewünschte Sicherheitsfunktionalität (12a, 12b),
3. automatisiertes Auswählen (49) des zu den ausgewählten Komponenten (100, 101, 102, 103, 104, 105, 106, 107, 108, 127, 128, 129, 130, 131, 132) und der ausgewählten Sicherheitsstufe, umfassend die ausgewählte Sicherheitskategorie und/oder die ausgewählte Sicherheitsfunktionalität (12a, 12b), gehörigen Schaubilds (49, 400, 401, 410, 411, 420, 421, 430, 431, 440, 441, 443) aus der computerimplementierten Bibliothek (42),
wobei
das computergestützte Auswählen (301, 302, 303, 304, 305, 306, 310, 311, 312, 313) von Komponenten (100, 101, 102, 103, 104, 105, 106, 107, 108, 127, 128, 129, 130, 131, 132) der gewünschten Anlage und der gewünschten Sicherheitsstufe iterativ anhand eines Verzweigungsbaums (500) erfolgt,
wobei in jedem Auswahlschritt zu den aktuell ausgewählten Komponenten (100, 101, 102, 103, 104, 105, 106, 107, 108, 127, 128, 129, 130, 131, 132) und der aktuell ausgewählten Sicherheitsstufe, umfassend die aktuell ausgewählte Sicherheitsfunktionalität (12a, 12b) und/oder die aktuell ausgewählte Sicherheitskategorie, das zugehörige Schaubild (49, 400, 401, 410, 411, 420, 421, 430, 431, 440, 441, 443) aus der computerimplementierten Bibliothek (42) ausgewählt und angezeigt wird.

2. Verfahren nach Anspruch 1,
**dadurch gekennzeichnet, dass**
der Verzweigungsbaum (500) als Liste von aktiven Links in jedem Schaubild (49, 400, 401, 410, 411, 420, 421, 430, 431, 440, 441, 443) angezeigt wird,
wobei die gewünschten Komponenten (100, 101, 102, 103, 104, 105, 106, 107, 108, 127, 128, 129, 130, 131, 132) und die gewünschte Sicherheitsstufe durch Betätigen der entsprechenden Links des aktuellen Schaubilds (49, 400, 401, 410, 411, 420, 421, 430, 431, 440, 441, 443) ausgewählt werden, insbesondere wobei die Liste von aktiven Links für alle Schaubilder (49, 400, 401, 410, 419, 420, 421, 430, 431, 440, 441, 443) gleich ist
und alle auswählbaren Komponenten (100, 101, 102, 103, 104, 105, 106, 107, 108, 127, 128, 129, 130, 131, 132) und Sicherheitsfunktionalitäten (12a, 12b) und/oder Sicherheitskategorien enthält und die jeweils ausgewählten Komponenten (100, 101, 102, 103, 104, 105, 106, 107, 108, 127, 128, 129, 130, 131, 132) und Sicherheitsfunktionalitäten (12a, 12b) und/oder Sicherheitskategorien besonders kenntlich gemacht sind, insbesondere durch ein spezielles Symbol.

3. Verfahren nach einem der vorangegangenen Ansprüche,
**dadurch gekennzeichnet, dass**
jedes Schaubild (49, 400, 401, 410, 411, 420, 421, 430, 431, 440, 441, 443) mindestens einen Verschaltungsplan (1) für die Anlage enthält
und dass die Verschaltungspläne (1) der Schaubilder (49, 400, 401, 410, 411, 420, 421, 430, 431, 440, 441, 443) sicherheitszertifiziert sind, insbesondere wobei jedes Schaubild (49, 400, 401, 410, 411, 420, 421, 430, 431, 440, 441, 443) ein spezifisches Prüfsiegel anzeigt.

4. Vorrichtung zum computergestützten Konstruieren einer Anlage mit definierter Sicherheitsstufe,
**dadurch gekennzeichnet, dass**
- ein erster Speicherbereich vorhanden ist, in dem eine computerimplementierte Bibliothek (42) mit einer Vielzahl von Schaubildern (49, 400, 401, 410, 411, 420, 421, 430, 431, 440, 441, 443) von Anlagen hinterlegt ist, wobei zu jedem Schaubild (49, 400, 401, 410, 411, 420, 421, 430, 431, 440, 441, 443) zusätzlich zumindest die Komponenten (100, 101, 102, 103, 104, 105, 106, 107, 108, 127, 128, 129, 130, 131, 132) der abgebildeten Anlage und die durch das Schaubild (49, 400, 401, 410, 411, 420, 421, 430, 431, 440, 441, 443) realisierte Sicherheitsstufe, umfassend die durch das Schaubild (49, 400, 401, 410, 411, 420, 421, 430, 431, 440, 441, 443) realisierte Sicherheitskategorie und/oder die durch das Schaubild (49, 400, 401, 410, 411, 420, 421, 430, 431, 440, 441, 443) realisierte Sicherheitsfunktionalität (12a, 12b), hinterlegt sind
- Mittel (41) zur automatisierten Auswahl (49) eines Schaubildes (49, 400, 401, 410, 411, 420, 421, 430, 431, 440, 441, 443) aus der computerimplementierten Bibliothek (42) vorhanden sind und
- Mittel (51) zum Anzeigen (45) des ausgewählten Schaubildes (49, 400, 401, 410, 411, 420, 421, 430, 431, 440, 441, 443) vorhanden sind,
wobei jedes Schaubild (49, 400, 401, 410, 411, 420, 421, 430, 431, 440, 441, 443) mindestens einen Verschaltungsplan (1) für die Anlage enthält und jedes Schaubild (49, 400, 401, 410, 411, 420, 421, 430, 431, 440, 441, 443) eine funktionsfähige Anlage, insbesondere in stilisierter Form, abbildet
und jedes Schaubild (49, 400, 401, 410, 411, 420, 421, 430, 431, 440, 441, 443) der computerimplementierten Bibliothek (42) eine eindeutige Identifizierungskennung für das Schaubild (49, 400, 401, 410, 411, 420, 421, 430, 431, 440, 441, 443) abbildet, wobei die Identifizierungskennung zur Dokumentation der Herkunft und Entstehungsgeschichte des Schaubilds (49, 400, 401, 410, 411, 420, 421, 430, 431, 440, 441, 443), eine Information über die Version einer verwendeten Software und/oder über ein Erstellungsdatum des Schaubilds (49, 400, 401, 410, 411, 420, 421, 430, 431, 440, 441, 443) und/oder über einen Ersteller des Schaubilds (49, 400, 401, 410, 411, 420, 421, 430, 431, 440, 441, 443) und/oder eine fortlaufende Nummer enthält,
und wobei die Mittel (41) zur automatisierten Auswahl (49) eines Schaubildes (49, 400, 401, 410, 411, 420, 421, 430, 431, 440, 441, 443) aus der computerimplementierten Bibliothek (42) derart eingerichtet sind, dass ein computergestütztes Auswählen (301, 302, 303, 304, 305, 306, 310, 311, 312, 313) von Komponenten der gewünschten Anlage und der gewünschten Sicherheitsstufe iterativ anhand eines Verzweigungsbaums (500) durchführbar ist,
wobei in jedem Auswahlsrhritt (301, 302, 303, 304, 305, 306, 310, 311, 312, 313) zu den aktuell ausgewählten Komponenten (100, 101, 102, 103, 104, 105, 106, 107, 108, 127, 128, 129, 130, 131, 132) und der aktuell ausgewählten Sicherheitsstufe, umfassend die aktuell ausgewählte Sicherheitsfunktionalität (12a, 12b) und/oder die aktuell ausgewählte Sicherheitskategorie, das zugehörige Schaubild (49, 400, 401, 410, 411, 420, 421, 430, 431, 440, 441, 443) aus der computerimplementierten Bibliothek (42) auswählbar und anzeigbar ist.

5. Vorrichtung nach Anspruch 4,
**dadurch gekennzeichnet, dass**
die möglichen sicherheitsfunktionalitäten (12a, 12b) durch Merkmale beschrieben sind, wobei
die Sicherheitsfunktionalitäten (12a, 12b) durch sukzessives Hinzunehmen (310, 311, 312, 313) von Merkmalen aus einer Gruppe von Merkmalen zu einer Sicherheits-Grundfunktionalität gebildet sind,
insbesondere wobei
die Gruppe der Merkmale die Merkmale "sichere Abschaltung" und/oder "sichere Kommunikation" und/oder "sichere Geschwindigkeiten" und/oder "sichere Positionen" umfasst.

6. Vorrichtung nach Anspruch 5,
**dadurch gekennzeichnet, dass**
die Sicherheits-Grundfunktionalität durch das Merkmal "sichere Abschaltung" beschrieben wird
und die möglichen Sicherheitsfunktionalitäten (12a, 12b) durch sukzessives Hinzunehmen (310, 311, 312, 313) von Merkmalen in der Reihenfolge nach Anspruch 5 gebildet sind.

7. Vorrichtung nach einem der Ansprüche 4 bis 6,
**dadurch gekennzeichnet, dass**
jedes Schaubild (49, 400, 401, 410, 411, 420, 421, 430, 431, 440, 441, 443) die Komponenten (100, 101, 102, 103, 104, 105, 106, 107, 108, 127, 128, 129, 130, 131, 132) der Anlage und Verbindungsleitungen (120, 121, 122, 123, 124, 125) zwischen den Komponenten (100, 101, 102, 103, 104, 105, 106, 107, 108, 127, 128, 129, 130, 131, 132) abbildet
und/oder
gleichartige Verbindungsleitungen (120, 121, 122, 123, 124, 125), insbesondere Starkstromleitungen, 24V-Leitungen und/oder Signalleitungen, in jedem Schaubild (49, 400, 401, 410, 411, 420, 421, 430, 431, 440; 441, 443) durch gleiche Merkmale, insbesondere Strichstärke, Musterung und/oder Farbwahl, kenntlich gemacht sind.

8. Vorrichtung nach einem der Ansprüche 4 bis 7,
**dadurch gekennzeichnet, dass**
bei dem in den Schaubildern (49, 400, 401, 410, 411, 420, 421, 430, 431, 440, 441, 443) abgebildeten Komponenten (100, 101, 102, 103, 104, 105, 106, 107, 108, 127, 128, 129, 130, 131, 132) Anschlussmittel (126, 203, 204) bildhaft derart dargestellt sind, dass die Lage der Anschlussmittel (126, 203, 204) an jeder Komponente (100, 101, 102, 103, 104, 105, 106, 107, 108, 127, 128, 129, 130, 131, 132) relativ zueinander und/oder zu der Komponente (100, 101, 102, 103, 104, 105, 106, 107, 108, 127, 128, 129, 130, 131, 132) mit der Lage der Anschlussmittel an einer zugehörigen realen Komponente übereinstimmt.

9. Vorrichtung nach der Anspruch 7 in Verbindung mit Anspruch 8, **dadurch gekennzeichnet, dass**
die Verbindungsleitungen (120, 121, 122, 123, 124, 125) die jeweils elektrisch zu verbindenden Anschlussmittel (126, 203, 204) der Komponenten (100, 101, 102, 103, 104, 105, 106, 107, 108, 127, 128, 129, 130, 131, 132) grafisch verbinden.

10. Vorrichtung nach einem der Ansprüche 4 bis 9,
**dadurch gekennzeichnet, dass**
die Komponenten (100, 101, 102, 103, 104, 105, 106, 107, 108, 127, 128, 129, 130, 131, 132) in den Schaubildern (49, 400, 401, 410, 411, 420, 421, 430, 431, 440, 441, 443) fotoähnlich dargestellt sind.

11. Vorrichtung nach einem der Ansprüche 7 bis 9,
**dadurch gekennzeichnet, dass**
jedes Schaubild (49, 400, 401, 410, 411, 420, 421, 430, 431, 440, 441, 443) der computerimplementierten Bibliothek (42) eine Liste der im Schaubild (49, 400, 401, 410, 411, 420, 421, 430, 431, 440, 441, 443) abgebildeten Komponenten (100, 101, 102, 103, 104, 105, 106, 107, 108, 127, 128, 129, 130, 131, 132) abbildet
und/oder
jedes Schaubild (49, 400, 401, 410, 411, 420, 421, 430, 431, 440, 441, 443) der computerimplementierten Bibliothek (42) eine Information über die im Schaubild (49, 400, 401, 410, 411, 420, 421, 430, 431, 440, 441, 443) realisierte Sicheiheitsstufe abbildet und/oder
jedes Schaubild (49, 400, 401, 410, 411, 420, 421, 430, 431, 440, 441, 443) der computerimptementierten Bibliothek (42) Informationen abbildet, die beim Aufbau der Anlage nach dem Schaubild (49, 400, 401, 410, 411, 420, 421, 430, 431, 440, 441, 443) zu beachten sind
und/oder
in einer Gruppe von Schaubildern (49, 400, 401, 410, 411, 420, 421, 430, 431, 440, 441, 443) gleiche Komponenten (100, 101, 102, 103, 104, 105, 106, 107, 108, 127, 128, 129, 130, 131, 132) jeweils an derselben Stelle im Schaubild (49, 400, 401, 410, 411, 420, 421, 430, 431, 440, 441, 443) abgebildet sind
und/oder
in einer Gruppe von Schaubildern (49, 400, 401, 410, 411, 420, 421, 430, 431, 440, 441, 443) gleiche Verbindungsleitungen (120, 121, 122, 123, 124, 125), insbesondere Verbindungsleitungen (120, 121, 122, 123, 124, 125) zwischen gleichen Komponenten (100, 101, 102, 103, 104, 105, 106, 107, 108, 127, 128, 129, 130, 131, 132), jeweils an derselben grafischen Position im Schaubild (49, 400, 401, 410, 411, 420, 421, 430, 431, 440, 441, 443) abgebildet sind
und/oder
die Schaubilder (49, 400, 401, 410, 411, 420, 421, 430, 431, 440, 441, 443) in der computerimplementierten Bibliothek (42) nach ihrer jeweiligen Sicherheitskategorie getrennt hinterlegt sind.

12. Vorrichtung nach einem der Ansprüche 7 bis 9,
**dadurch gekennzeichnet, dass**
jedes Schaubild (49, 400, 401, 410, 411, 420, 421, 430, 431, 440, 441, 443) einen oder mehrere Antriebseinheiten, umfassend zumindest einen Motor, und zumindest einen Frequenzumrichter zeigt
und/oder
als Komponenten (100, 101, 102, 103, 104, 105, 106, 107, 108, 127, 128, 129, 130, 131, 132) Antriebseinheiten, Frequenzumrichter, Motorschütze, Schalter, Bussysteme, Winkelgeber, Anbau-Motorbremsen und/oder Steckkarten für Frequenzumrichter auswählbar sind
und/oder
als Verbindungsleitungen (120, 121, 122, 123, 124, 125) Drehstromleitungen, insbesondere Energieleitungen für eine Antriebseinheit, Energieleitungen für eine Bremse, Signalleitungen für einen Winkelgeber, sichere 24V-Versorgungsleitungen und/oder Leitungen für Steuer-/Rückmeldekanäle abgebildet sind
und/oder
die Merkmale der Schaubilder (49, 400, 401, 410. 411, 420, 421, 430, 431, 440, 441, 443) derart dargestellt sind, dass sie auch bei Schwarz-Weiß-Ausdruck sichtbar bleiben und/oder
jedes Schaubild (49, 400, 401, 410, 411, 420, 421, 430, 431, 440, 441, 443) sicherheitszertifiziert ist, insbesondere ein Prüfsiegel enthält.

13. Vorrichtung nach einem der Ansprüche 4 bis 12, umfassend
einen Rechner mit einer graphischen Benutzerschnittstelle und einem den ersten Speicherbereich bildenden Speicher mit den Schaubildern (49, 400, 401, 410, 411, 420, 421, 430, 431, 440, 441, 443), die die funktionsfähigen sicherheitstechnischen Verschaltungspläne (1) von Antriebssystemen zeigen,
wobei die Schaubilder (49, 400, 401, 410, 411, 420, 421, 430, 431, 440, 441, 443) aktive Links enthalten und
ein Benutzer durch Anwählen der aktiven Links über die graphische Benutzerschnittstelle zur Konfiguration eines Antriebssystems zwischen den Schaubildern (49, 400, 401, 410, 411, 420, 421, 430, 431, 440, 441, 443) seriell navigieren kann,
wobei die aktiven Links jeweils eine Modifizierung des Antriebssystems beschreiben.

## Claims

1. Method for the computer-assisted construction of an installation with defined safety level, having the steps in chronological order:
1. providing a multiplicity of diagrams (49, 400, 401, 410, 411, 420, 421, 430, 431, 440, 441, 443) of installations in a computer-implemented library (42),
wherein, in addition to each diagram (49, 400, 401, 410, 411, 420, 421, 430, 431, 440, 441, 443), at least the components (100, 101, 102, 103, 104, 105, 106, 107, 108, 127, 128, 129, 130, 131, 132) of the depicted installation and a safety level implemented by the diagram (49, 400, 401, 410, 411, 420, 421, 430, 431, 440, 441, 443), comprising a safety category implemented by the diagram (49, 400, 401, 410, 411, 420, 421, 430, 431, 440, 441, 443) and/or a safety functionality (12a, 12b) implemented by the diagram (49,-400, 401, 410, 411, 420, 421, 430, 431, 440, 441, 443, are stored,
2. computer-assisted selecting (301, 302, 303, 304, 305, 306, 310, 311, 312, 313) of components (100, 101, 102, 103, 104, 105, 106, 107, 108, 127, 128, 129, 130, 131, 132) of the desired installation and of the desiried safety level, comprising the desired safety category and/or the desired safety functionality (12a, 12b),
3. automated selecting (49) of the diagram (49, 400, 401, 410, 411, 420, 421, 430, 431, 440, 441, 443), associated with the selected components (100, 101, 102, 103, 104, 105, 106, 107, 108, 127, 128, 129, 130, 131, 132) and with the selected safety level, comprising the selected safety category and/or the selected safety functionality (12a, 12b), from the computer-implemented library (42),
wherein
the computer-assisted selecting (301, 302, 303, 304, 305, 306, 310, 311, 312, 313) of components (100, 101, 102, 103, 104, 105, 106, 107, .108, 127, 128, 129, 130, 131, 132) of the desired installation and of the desired safety level takes place iteratively with the aid of a branching tree (500),
wherein, in each selecting step, for the currently selected components (100, 101, 102, 103, 104, 105, 106, 107, 108, 127, 128, 129, 130, 131, 132) and the currently selected safety level, comprising the currently selected safety functionality (12a, 12b) and/or the currently
selected safety category, the associated diagram (49, 400, 401, 410, 411, 420, 421, 431, 440, 441, 443) is selected from the computer-implemented library (42) and displayed.

2. Method according to Claim 1,
**characterised in that**
the branching tree (500) is displayed as a list of active links in each diagram (49, 400, 401, 410, 411, 420, 421, 430, 431, 440, 441, 443),
wherein the desired components (100, 101, 102, 103, 104, 105, 106, 107, 108, 127, 128, 129, 130, 131, 132) and the desired safety level are selected by actuating the corresponding links of the current diagram (49, 400, 401, 410, 411, 420, 421, 430, 431, 440, 441, 443),
in particular wherein the list of active links is the same for all diagrams (449, 400, 401, 410, 411, 420, 421, 430, 431, 440, 441, 443)
and includes all selectable components (100, 101, 102, 103, 104, 105, 106, 107, 108, 127, 128, 129, 130, 131, 132) and safety functionalities (12a, 12b) and/or safety categories, and the respectively selected components (100, 101, 102, 103, 104, 105, 106, 107, 108, 127, 128, 129, 130, 131, 132) and safety functionalities (12a, 12b) and/or safety categories are specially marked, in particular by a special symbol.

3. Method according to one of the preceding claims, **characterised in that**
each diagram (49, 400, 401, 410, 411, 420, 421, 430, 431, 440, 441, 443) includes at least a confection diagram (1) for the installation
and **in that** the connection diagrams (1) of the diagrams (49, 400, 401, 410, 413, 420, 421, 430:, 431, 440, 441, 443) are safety-certified in particular each diagram (49, 400, 401, 410, 411, 420, 421, 430, 431, 440, 441, 443) displaying a specific mark of conformity.

4. Device for the computer-assisted construction of an installation with defined safety level,
**characterised in that**
- a first storage area is present, in which a computer-implemented library (42) with a multiplicity of diagrams (49, 400, 401, 410, 411, 420, 421, 430, 431, 440, 441, 443) of installations is stored,
wherein, in addition to each diagram (49, 400, 401, 410, 411, 420, 421, 430, 431, 440, 441, 443), at least the components (100, 101, 102, 103, 104, 105, 106, 107, 108, 127, 128, 129, 130, 131, 132) of the depicted installation and the safety level implemented by the diagram (49, 400, 401, 410, 411, 420, 421, 430, 431, 440, 441, 443), comprising the safety category implemented by the diagram (49, 400, 401, 410, 411, 420, 421, 430, 431, 440,: 441, 443) and/or the safety functionality (12a, 12b) implemented by the diagrams (49, 400, 401, 410, 411, 420, 421, 430, 431, 440, 441, 443), are stored,
- means (41) for the automated selection (49) of a diagram (49, 400, 401, 410, 411, 420, 421, 430, 431, 440, 441, 443) from the computer-implemented library (42) are present and
- means (51) for displaying (45) the selected diagram (49, 400, 401, 410, 411, 420, 421, 430, 431, 440, 441, 443) are present,
wherein each diagram (49, 400, 401, 410, 411, 420, 421, 430, 431, 440, 441, 443) includes at least a connection diagram (1) for the installation and each diagram (49, 400, 401, 410, 411, 420, 421, 430, 431, 440, 441, 443) depicts a functional installation, in particular in stylized form
and each diagram (49, 400, 401, 410, 411, 420, 421, 430, 431, 440, 441, 443) of the computer-implemented library (42) depicts a unique identification for the diagram (49, 400, 401, 410, 411, 420, 421, 430, 431, 440, 441, 443), the identification, for the documentation of the origin and development history of the diagram (49, 400, 401, 410, 411, 420, 421, 430, 431, 440, 441, 443), including information on the version of software used and/or on a creation date of the diagrams (49, 400, 401, 410, 411, 420, 421, 430, 431, 440, 441, 443) and/or on a creator of the diagram (49, 400, 401, 410, 411, 420, 421, 430, 431, 440, 441, 443) and/or a serial number,
and wherein the means (41) for the automated selection (49) of a diagram (49, 400, 401, 410, 411, 420, 421, 430, 431, 440, 441, 443) from the computer-implemented library (42) are configured in such a way that a computer-assisted selection (301, 302, 303, 304, 305, 306, 310, 311, 312, 313) of components, of the desired installation and of the desired safety level can be carried out iteratively with the aid of a branching tree (500), wherein, in each selecting step (301, 302, 303, 304, 305, 306, 310, 311, 312, 313), for the currently selected components (100, 101, 102, 103, 104, 105, 106, 107, 108, 127, 128, 129, 130, 131, 132) and the currently selected safety level, comprising the currently selected safety functionality (12a, 12b) and/or the currently selected safety category, the associated diagram (49, 400, 401, 410, 411, 420, 421, 430, 431, 440, 441, 443) can be selected from the computer-implemented library (42) and displayed.

5. Device according to Claim 4,
**characterised in that**
the possible safety functionalities (12a, 12b) are described by features,
wherein
the safety functionalities (12a, 12b) are formed by successive addition (310, 311, 312, 313) of features from a group of features to a safety basic functionality, in particular wherein
the group of the features comprises the features "safe switching-off" and/or "safe communication" and/or "safe speeds" and/or "safe positions".

6. Device according to Claim 5,
**characterised in that**
the safety basic functionality is described by the feature "safe switchinig-off"
and the possible safety functionalities (12a, 12b) are formed by successive addition (310, 311, 312, 313) of features in the order according to Claim 5.

7. Device according to one of Claims 4 to 6, **characterised in that**
each diagram (49, 400, 401, 410, 411, 420, 421, 430, 431, 440, 441, 443) depicts the components (100, 101, 102, 103, 104, 105, 106, 107, 108, 127, 128, 129, 130, 131, 132) of the installation and connecting lines (120, 121, 122, 123, 124, 125) between the components (100, 101, 102, 103, 104, 105, 106, 107, 108, 127, 128, 129, 130, 131, 132)
and/or
connecting lines (120, 121, 122, 123, 124, 125) of the same kind, in particular power current lines, 24 V lines and/or signal lines, are marked in each diagram (49, 400, 401, 410, 411, 420, 421, 430, 431, 440, 441, 443) by the same features, in particular line thickness, pattern and/or colour selection.

8. Device according to one of Claims 4 to 7, **characterised in that**
in the case of the components (100, 101, 102, 103, 104, 105, 106, 107, 108, 127, 128, 129, 130, 131, 132) depicted in the diagrams (49, 400, 401, 410, 411, 420, 421, 430, 431, 440, 441, 443), connection means (126, 203, 204) are illustrated pictorially in such a way that the position of the connection means (126, 203, 204) at each component (100, 101, 102, 103, 104, 105, 106, 107, 108, 127, 128, 129, 130, 131, 132) relative to one another and/or to the component (100, 101, 102, 103, 104, 105, 106, 107, 108, 127, 128, 129, 130, 131, 132) corresponds to the position of the connection means at an associated real component.

9. Device according to Claim 7 in conjunction with Claim 8,
**characterised in that**
the connecting lines (120, 121, 122, 123, 124, 125) graphically connect the confection means (126, 203, 204), in each case to be electrically connected, of the components (100, 101, 102, 103, 104, 105, 106, 107, 108, 127, 128, 129, 130, 131, 132).

10. Device according to one of Claims 14 to 9,
**characterised in that**
the components (100, 101, 102, 103, 104, 105, 106, 107, 108, 127, 128, 129, 130, 131, 132) are illustrated photo-like in the diagram (49, 400, 401, 410, 411, 420, 421, 430, 431, 440, 441, 443).

11. Device according to one of Claims 7 to 9,
**characterised in that**
each diagram (49, 400, 401, 410, 411, 420, 421, 430, 431, 440, 441, 443) of the computer-implemented library (42) depicts a list of the components (100, 101, 102, 103, 104, 105, 106, 107, 108, 127, 128, 129, 130, 131, 132) depicted in the diagram (49, 400, 401, 410, 411, 420, 421, 430, 431, 440, 441, 443)
and/or
each diagram (49, 400, 401, 410, 411, 420, 421, 430, 431, 440, 441, 443) of the computer-implemented library (42) depicts information on the safety level implemented in the diagram (49, 400, 401, 410, 411, 420, 421, 430, 431, 440, 441, 443)
and/or
each diagram (49, 400, 401, 410, 411, 420, 421, 430, 431, 440, 441, 443) of the computer-implemented library (42) depicts information which is to be taken into account duping the construction of the installation according to the diagram (49, 400, 401, 410, 411, 420, 421, 430, 431, 440, 441, 443)
and/or
in a group of diagrams (49, 400, 401, 410, 411, 420, 421, 430, 431, 440, 441, 443), identical components (100, 101, 102, 103, 104, 105, 106, 107, 108, 127, 128, 129, 130, 131, 132) are depicted in each case at the same place in the diagram (49, 400, 401, 410, 411, 420, 421, 430, 431, 440, 441, 443)
and/or
in a group of diagrams (49, 400, 401, 410, 411, 420, 421, 430, 431, 440, 441, 443), identical connecting lines (120, 121, 122, 123, 124, 125), in particular connecting lines (120, 121, 122, 123, 124, 125) between identical components (100, 101, 102, 103, 104, 105, 106, 107, 108, 127, 128, 129, 130, 131, 132), are depicted in each case at the same graphical position in the diagram (49, 400, 401, 410, 411, 420, 421, 430, 431, 440, 441, 44.3)
and/or
the diagrams (49, 400, 401, 410, 411, 120, 421, 430, 431, 440, 441, 443) are stored in the computer-implemented library (42) separated according to their respective safety category.

12. Device according to one of Claims 7 to 9,
**characterised in that**
each diagram (49, 400, 401, 410, 411, 420, 421, 430, 431, 440, 441, 443) shows one/or more drive units, comprising at least a motor, and at least a frequency converter and/or
drive units, frequency converters, motor contactors, switches, bus systems, angle sensory, add-on motor brakes and/or plug-in cards for frequency converters are selectable as components (100, 101, 102, 103, 104, 105, 106, 107, 108, 127, 128, 129, 130, 131, 132)
and/or
three-phase current lines, in particular power lines for a drive unit, power lines for a brake, signal lines for an angle sensor, safe 24 V supply lines and/or lines for control/feedback channels are depicted as connecting
lines (120, 121, 122, 123, 124, 125)
and/or
the features of the diagrams (49, 400, 401, 410, 411, 420, 421, 430, 431, 440, 441, 443) are illustrated in such a way that they remain visible also on a black-and-white printout
and/or
each diagram (49, 400, 401, 410, 411, 420, 421, 430, 431, 440, 441, 443) is safety-certified, in particular includes a mark of conformity.

13. Device according to one of Claims 4 to 12, comprising a computer with a graphical user interface and a store which forms the first storage area and contains the diagrams (49, 400, 401, 410, 411, 420, 421, 430, 431, 440, 441, 443) which show, the functional, safety-related connection diagrams (1) of drive systems, wherein the diagrams (49, 400, 401, 410, 411, 420, 421, 430, 431, 440, 441, 443) include active links and
a user can serially navigate between the diagrams (49, 400, 401, 410, 411, 420, 421, 430, 431, 440, 441, 443) by selecting the active links via the graphical user interface to configure a drive system,
wherein the active links each describe a modification of the drive system.

## Revendications

1. Procédé de construction assistée par ordinateur d'une installation avec un niveau de sécurité défini, présentant les étapes suivantes dans l'ordre chronologique :
1. mise à disposition d'une pluralité de schémas (49, 400, 401, 410, 411, 420, 421, 430, 431, 440, 441, 443) d'installations dans une bibliothèque (42) implémentée sur ordinateur, au moins les composants (100, 101, 102, 103, 104, 105, 106, 107, 108, 127, 128, 129, 130, 131, 132) de l'installation représentée et un niveau de sécurité réalisé par le schéma (49, 400, 401, 410, 411, 420, 421, 430, 431, 440, 441, 443), comprenant une catégorie de sécurité réalisée par le schéma (49, 400, 401, 410, 411, 420, 421, 430, 431, 440, 441, 443) et/ou une fonctionnalité de sécurité (12a, 12b) réalisée par le schéma (49, 400, 401, 410, 411, 420, 421, 430, 431, 440, 441, 443), étant stockés en plus pour chaque schéma (49, 400, 401, 410, 411, 420, 421, 430, 431, 440, 441,443),
2. sélection assistée par ordinateur (301, 302, 303, 304, 305, 306, 310, 311, 312, 313) de composants (100, 101, 102, 103, 104, 105, 106, 107, 108, 127, 128, 129, 130, 131, 132) de l'installation souhaitée et du niveau de sécurité souhaité, comprenant la catégorie de sécurité souhaitée et/ou la fonctionnalité de sécurité (12a, 12b) souhaitée,
3. sélection automatisée (49) du schéma (49, 400, 401, 410, 411, 420, 421, 430, 431, 440, 441, 443) correspondant aux composants (100, 101, 102, 103, 104, 105, 106, 107, 108, 127, 128, 129, 130, 131, 132) sélectionnés et au niveau de sécurité sélectionné, comprenant la catégorie de sécurité sélectionnée et/ou la fonctionnalité de sécurité (12a, 12b) sélectionnée, dans la bibliothèque (42) implémentée sur ordinateur,
dans lequel
la sélection assistée par ordinateur (301, 302, 303, 304, 305, 306, 310, 311, 312, 313) de composants (100, 101, 102, 103, 104, 105, 106, 107, 108, 127, 128, 129, 130, 131, 132) de l'installation souhaitée et du niveau de sécurité souhaité a lieu de manière itérative à l'aide d'un arbre de branchement (500),
le schéma (49, 400, 401, 410, 411, 420, 421, 430, 431, 440, 441, 443) correspondant aux composants (100, 101, 102, 103, 104, 105, 106, 107, 108, 127, 128, 129, 130, 131, 132) actuellement sélectionnés et au niveau de sécurité actuellement sélectionné, comprenant la fonctionnalité de sécurité (12a, 12b) actuellement sélectionnée et/ou la catégorie de sécurité actuellement sélectionnée, étant sélectionné dans la bibliothèque (42) implémentée sur ordinateur et affiché à chaque étape de sélection.

2. Procédé selon la revendication 1,
**caractérisé en ce que**
l'arbre de branchement (500) est affiché sous la forme d'une liste de liens actifs dans chaque schéma (49, 400, 401, 410, 411, 420, 421, 430, 431, 440, 441, 443), les composants (100, 101, 102, 103, 104, 105, 106, 107, 108, 127, 128, 129, 130, 131, 132) souhaités et le niveau de sécurité souhaité étant sélectionnés en actionnant les liens correspondants du schéma (49, 400, 401, 410, 411, 420, 421, 430, 431, 440, 441, 443) actuel,
la liste de liens actifs étant en particulier identique pour tous les schémas (49, 400, 401, 410, 411, 420, 421, 430, 431, 440, 441, 443)
et contenant tous les composants (100, 101, 102, 103, 104, 105, 106, 107, 108, 127, 128, 129, 130, 131, 132) et fonctionnalités de sécurité (12a, 12b) et/ou catégories de sécurité sélectionnables et les composants (100, 101, 102, 103, 104, 105, 106, 107, 108, 127, 128, 129, 130, 131, 132) et fonctionnalités de sécurité (12a, 12b) et/ou catégories de sécurité respectivement sélectionnés étant identifiés de manière particulière, en particulier par un symbole spécial.

3. Procédé selon une des revendications précédentes,
**caractérisé en ce que**
chaque schéma (49, 400, 401, 410, 411, 420, 421, 430, 431, 440, 441, 443) contient au moins un plan de câblage (1) pour l'installation et que les plans de câblage (1) des schémas (49, 400, 401, 410, 411, 420, 421, 430, 431, 440, 441, 443) sont certifiés sécurité, chaque schéma (49, 400, 401, 410, 411, 420, 421, 430, 431, 440, 441, 443) affichant en particulier un sceau de contrôle spécifique.

4. Dispositif de construction assistée par ordinateur d'une installation avec un niveau de sécurité défini,
**caractérisé en ce que**
- une première zone de mémoire est prévue, dans laquelle est stockée une bibliothèque (42) implémentée sur ordinateur contenant une pluralité de schémas (49, 400, 401, 410, 411, 420, 421, 430, 431, 440, 441, 443) d'installations,
au moins les composants (100, 101, 102, 103, 104, 105, 106, 107, 108, 127, 128, 129, 130, 131, 132) de l'installation représentée et le niveau de sécurité réalisé par le schéma (49, 400, 401, 410, 411, 420, 421, 430, 431, 440, 441, 443), comprenant la catégorie de sécurité réalisée par le schéma (49, 400, 401, 410, 411, 420, 421, 430, 431, 440, 441, 443) et/ou la fonctionnalité de sécurité (12a, 12b) réalisée par le schéma (49, 400, 401, 410, 411, 420, 421, 430, 431, 440, 441, 443), étant stockés en plus pour chaque schéma (49, 400, 401, 410, 411, 420, 421, 430, 431 , 440, 441, 443),
- des moyens (41) sont prévus pour la sélection automatisée (49) d'un schéma (49, 400, 401, 410, 411, 420, 421, 430, 431, 440, 441, 443) dans la bibliothèque (42) implémentée sur ordinateur et
- des moyens (51) sont prévus pour l'affichage (45) du schéma (49, 400, 401, 410, 411, 420, 421, 430, 431, 440, 441, 443) sélectionné,
chaque schéma (49, 400, 401, 410, 411, 420, 421, 430, 431, 440, 441, 443) contenant au moins un plan de câblage (1) pour l'installation et chaque schéma (49, 400, 401, 410, 411, 420, 421, 430, 431, 440, 441, 443) représentant une installation opérationnelle, en particulier sous forme stylisée
et chaque schéma (49, 400, 401, 410, 411, 420, 421, 430, 431, 440, 441, 443) de la bibliothèque (42) implémentée sur ordinateur représentant un identificateur univoque du schéma (49, 400, 401, 410, 411, 420, 421, 430, 431, 440, 441, 443), l'identificateur contenant une information sur la version du logiciel utilisé et/ou sur une date de création du schéma (49, 400, 401, 410, 411, 420, 421, 430, 431, 440, 441, 443) et/ou sur un auteur du schéma (49, 400, 401, 410, 411, 420, 421, 430, 431, 440, 441, 443) et/ou un numéro continu pour la documentation de l'origine et de l'historique de création du schéma (49, 400, 401, 410, 411, 420, 421, 430, 431, 440, 441, 443),
et les moyens (41) de sélection automatisée (49) d'un schéma (49, 400, 401, 410, 411, 420, 421, 430, 431, 440, 441, 443) dans la bibliothèque (42) implémentée sur ordinateur étant conçus de façon qu'une sélection assistée par ordinateur (301, 302, 303, 304, 305, 306, 310, 311, 312, 313) de composants de l'installation souhaitée et du niveau de sécurité souhaité soit réalisable de manière itérative à l'aide d'un arbre de branchement (500),
le schéma (49, 400, 401, 410, 411, 420, 421, 430, 431, 440, 441, 443) correspondant aux composants (100, 101, 102, 103, 104, 105, 106, 107, 108, 127, 128, 129, 130, 131, 132) actuellement sélectionnés et au niveau de sécurité actuellement sélectionné, comprenant la fonctionnalité de sécurité (12a, 12b) actuellement sélectionnée et/ou la catégorie de sécurité actuellement sélectionnée, pouvant être sélectionné dans la bibliothèque (42) implémentée sur ordinateur et affichée à chaque étape de sélection (301, 302, 303, 304, 305, 306, 310, 311, 312, 313).

5. Dispositif selon la revendication 4,
**caractérisé en ce que**
les fonctionnalités de sécurité (12a, 12b) possibles sont décrites par des caractéristiques, les fonctionnalités de sécurité (12a, 12b) étant formées par ajout successif (310, 311, 312, 313) de caractéristiques d'un groupe de caractéristiques à une fonctionnalité de sécurité de base,
le groupe de caractéristiques comprenant en particulier les caractéristiques « coupure sûre » et/ou « communication sûre » et/ou « vitesses sûres » et/ou « positions sûres ».

6. Dispositif selon la revendication 5,
**caractérisé en ce que**
la fonctionnalité de sécurité de base est décrite par la caractéristique « coupure sûre » et les fonctionnalités de sécurité (12a, 12b) possibles sont formées par ajout successif (310, 311, 312, 313) de caractéristiques dans l'ordre selon la revendication 5.

7. Dispositif selon une des revendications 4 à 6,
**caractérisé en ce que**
chaque schéma (49, 400, 401, 410, 411, 420, 421, 430, 431, 440, 441, 443) représente les composants (100, 101, 102, 103, 104, 105, 106, 107, 108, 127, 128, 129, 130, 131, 132) de l'installation et des lignes de connexion (120, 121, 122, 123, 124, 125) entre les composants (100, 101, 102, 103, i04, 105, 106, 107, 108, 127, 128, 129, 130, 131, 132) et/ou
des lignes de connexion (120, 121, 122, 123, 124, 125) de même nature, en particulier des lignes à courant fort, des lignes 24 V et/ou des lignes de signalisation, sont identifiées par les mêmes caractéristiques, en particulier épaisseur de trait, dessin et/ou choix de couleur dans chaque schéma (49, 400, 401, 410, 411, 420, 421, 430, 431, 440, 441, 443).

8. Dispositif selon une des revendications 4 à 7,
**caractérisé en ce que**
des moyens de connexion (126, 203, 204) pour les composants (100, 101, 102, 103, 104, 105, 106, 107, 108, 127, 128, 129, 130, 131, 132) représentés dans les schémas (49, 400, 401, 410, 411, 420, 421, 430, 431, 440, 441, 443) sont représentés de manière imagée de façon que la position des moyens de connexion (126, 203, 204) sur chaque composant (100, 101, 102, 103, 104, 105, 106, 107, 108, 127, 128, 129, 130, 131, 132) les uns par rapport aux autres et/ou par rapport au composant (100, 101, 102, 103, 104, 105, 106, 107, 108, 127, 128, 129, 130, 131, 132) coïcide avec la position des moyens de connexion sur un composant réel correspondant.

9. Dispositif selon la revendication 7 en liaison avec la revendication 8,
**caractérisé en ce que**
les lignes de connexion (120, 121, 122, 123, 124, 125) relient graphiquement les moyens de connexion (126, 203, 204) des composants (100, 101, 102, 103, 104, 105, 106, 107, 108, 127, 128, 129, 130, 131, 132) à relier électriquement.

10. Dispositif selon une des revendications 4 à 9,
**caractérisé en ce que**
les composants (100, 101, 102, 103, 104, 105, 106, 107, 108, 127, 128, 129, 130, 131, 132) sont représentés en qualité photographique dans les schémas (49, 400, 401, 410, 411, 420, 421, 430, 431, 440, 441, 443).

11. Dispositif selon une des revendications 7 à 9,
**caractérisé en ce que**
chaque schéma (49, 400, 401, 410, 411, 420, 421, 430, 431, 440, 441, 443) de la bibliothèque (42) implémentée sur ordinateur représente une liste des composants (100, 101, 102, 103, 104, 105, 106, 107, 108, 127, 128, 129, 130, 131, 132) représentés dans le schéma (49, 400, 401, 410, 411, 420, 421, 430, 431, 440, 441, 443) et/ou
chaque schéma (49, 400, 401, 410, 411, 420, 421, 430, 431, 440, 441, 443) de la bibliothèque (42) implémentée sur ordinateur représente une information sur le niveau de sécurité réalisé dans le schéma (49, 400, 401, 410, 411, 420, 421, 430, 431, 440, 441, 443)
et/ou
chaque schéma (49, 400, 401, 410, 411, 420, 421, 430, 431, 440, 441, 443) de la bibliothèque (42) implémentée sur ordinateur représente une information à prendre en compte dans la construction de l'installation selon le schéma (49, 400, 401, 410, 411, 420,421,430,431,440,441,443)
et/ou
dans un groupe de schémas (49, 400, 401, 410, 411, 420, 421, 430, 431, 440, 441, 443), les mêmes composants (100, 101, 102, 103, 104, 105, 106, 107, 108, 127, 128, 129, 130, 131, 132) sont chaque fois représentés au même endroit dans le schéma (49, 400, 401, 410, 411, 420, 421, 430, 431, 440, 441, 443).
et/ou
dans un groupe de schémas (49, 400, 401, 410, 411, 420, 421, 430, 431, 440, 441, 443), les mêmes lignes de connexion (120, 121, 122, 123, 124, 125), en particulier les lignes de connexion (120, 121, 122, 123, 124, 125) entre les mêmes composants (100, 101, 102, 103, 104, 105, 106, 107, 108, 127, 128, 129, 130, 131, 132) sont chaque fois représentées à la même position graphique dans le schéma (49, 400, 401, 410, 411, 420, 421, 430, 431, 440, 441, 443)
et/ou
les schémas (49, 400, 401, 410, 411, 420, 421, 430, 431, 440, 441, 443) sont stockés séparément selon leur catégorie de sécurité respective dans la bibliothèque (42) implémentée sur ordinateur.

12. Dispositif selon une des revendications 7 à 9,
**caractérisé en ce que**
chaque schéma (49, 400, 401, 410, 411, 420, 421, 430, 431, 440, 441, 443) présente une ou plusieurs unités d'entraînement comprenant au moins un moteur et au moins un variateur de fréquence
et/ou
des unités d'entraînement, variateurs de fréquence, contacteurs moteur; commutateurs, systèmes de bus, capteurs angulaires, freins moteur rapportés et/ou cartes enfichables pour variateurs de fréquence sont sélectionnables en tant que composants (100, 101, 102, 103, 104, 105, 106, 107, 108, 127, 128, 129, 130, 131, 132) et/ou
des lignes à courant triphasé, en particulier des lignes d'énergie pour une unité d'entraînement, des lignes d'énergie pour un frein, des lignes de signalisation pour un capteur angulaire, des lignes d'alimentation 24 V de sécurité et/ou des lignes pour des canaux de commande/retour sont représentées en tant que lignes de connexion (120, 121, 122, 123, 124, 125)
et/ou
les caractéristiques des schémas (49, 400, 401, 410, 411, 420, 421, 430, 431, 440, 441, 443) sont représentées de telle sorte qu'elles restent visibles même en cas d'impression en noir et blanc
et/ou
chaque schéma (49, 400, 401, 410, 411, 420, 421, 430, 431, 440, 441, 443) est certifié sécurité, en particulier contient un sceau de contrôle.

13. Dispositif selon une des revendications 4 à 12, comprenant
un ordinateur avec une interface utilisateur graphique et une mémoire formant la première zone de mémoire avec les schémas (49, 400, 401, 410, 411, 420, 421, 430, 431, 440, 441, 443) qui montrent les plans de câblage (1) de systèmes d'entraînement opérationnels en matière de sécurité,
les schémas (49, 400, 401, 410, 411, 420, 421, 430, 431, 440, 441, 443) contenant des liens actifs et
un utilisateur pouvant naviguer séquentiellement entre les schémas (49, 400, 401, 410, 411, 420, 421, 430, 431, 440, 441, 443) en sélectionnant les liens actifs via l'interface utilisateur graphique pour configurer un système d'entraînement,
les liens actifs décrivant chaque fois une modification du système d'entraînement.
